(19) **Europäisches Patentamt / European Patent Office / Office européen des brevets**

(11) **EP 1 515 101 B1**

(12) **EUROPEAN PATENT SPECIFICATION**

(45) Date of publication and mention
of the grant of the patent:
**07.01.2009 Bulletin 2009/02**

(51) Int Cl.:
**F25B 41/06** (2006.01)

(21) Application number: **04021447.0**

(22) Date of filing: **09.09.2004**

(54) **Flow-regulating expansion valve**

Entspannungsventil mit regulierbarem Durchfluss

Vanne de détente à régulation de débit

(84) Designated Contracting States:
**DE FR**

(30) Priority: **11.09.2003 JP 2003320006**

(43) Date of publication of application:
**16.03.2005 Bulletin 2005/11**

(73) Proprietor: **TGK COMPANY, LTD.**
**Tokyo 193-0942 (JP)**

(72) Inventor: **Hirota, Hisatoshi**
**Hachioji-shi**
**Tokyo 193-0942 (JP)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A- 1 265 041**          **EP-A- 1 316 750**
**US-B1- 6 182 457**

• **PATENT ABSTRACTS OF JAPAN vol. 2000, no. 04, 31 August 2000 (2000-08-31) & JP 2000 009246 A (TOKYO GAS CO LTD), 11 January 2000 (2000-01-11)**

## Description

The present invention relates to a flow-regulating expansion valve according to the preamble of claim 1.

A known flow-regulating expansion valve (UP-A-2001-153495) in a refrigeration cycle of an automotive air conditioner decompresses refrigerant by adiabatic expansion, but also electrically controls the flow rate. The flow-regulating mechanism is integrated into a body block separate from piping constituting a refrigerant passage of a refrigeration cycle. A high-pressure refrigerant inlet passage an an expanded refrigerant outlet passage are provided. The differential pressure across the differential pressure control expansion valve is controlled by a solenoid to hold the flow rate at a predetermined constant level. The arrangement occupies much mounting space because the body block is separate from the piping of the refrigeration cycle. Further, the internal refrigerant passage where internal structures of the flow-regulating mechanism such as a restriction and a valve element, are arranged, and the solenoid section for the internal structures are separately disposed in the body block. The positioning of the high-pressure refrigerant inlet passage, the expanded refrigerant outlet passage, and the connecting internal refrigerant passage according as well as the design of the flow-regulating mechanism and also the positioning of joints with the piping of the refrigerant cycle are complicated and negatively influence the manufacturing costs.

In the proportional solenoid valve known from EP 1 316 750 A a tubular valve seat forming member is fixed in the hollow fixed core of the solenoid. A hollow tubular valve element forming member is fixed in the hollow movable core and is slidably guided on the outer periphery of the valve seat forming member. The lower end edge of the valve element forming member co-acts with a conical valve seat. In addition, the movable core and the valve element forming member both are loaded by an elastic member in valve closing direction. The width of the flow gap between the valve element and the valve seat exclusively depends on the value of the current supplied to the solenoid and the force of the spring. The set width of the flow gap determines the flow rate through the proportional solenoid valve. As the valve element forming member is axially pressure balanced, the set width of the flow gap does not change when e.g. the upstream pressure increases, such that the actual flow rate through the flow gap varies in dependence on pressure variations upstream and/or downstream of the flow gap.

US 6,182,457 B1 refers to an electronic variable orifice tube serving as an expansion valve in a refrigeration system. The expansion valve is switched by the solenoid between two predetermined positions. In the first position and without influence of the solenoid the flow rate depends on a restriction passage in a restrictor then open flow passages which summarised define a larger cross-sectional area than the cross-section of the restriction passage. When the solenoid is energised, the valve switches into the second position in which the flow rate depends on the cross-section of a small flow passage only. The flow rate varies in each position of the expansion valve when the pressure upstream and/or downstream varies.

It is an object of the invention to provide a flow regulating expansion valve which is compact in size and may be realized at low cost.

The object is achieved with the features of claim 1.

Here, the "pipe" may be, for example, one exclusively used for the flow-regulating expansion valve, and is connected to the piping of the refrigeration cycle by a joint or the like, or alternatively, may already be a part of the piping of the refrigeration cycle. The "predetermined reference position of the movable core" is a position which assures that the flow rate is equal to the preset constant flow rate, and means a position where a balance occurs between the internal pressures and the urging forces applied to the movable core.

In the expansion valve, the movable core is moved relative to the fixed core by energizing or de-energizing the solenoid coil. This causes the valve-opening and valve-closing operations of the flow-regulating mechanism for adjusting the size of the internal passage cross-section. The refrigerant is expanded or decompressed by the flow-regulating mechanism corresponding to the co-action between the operation of the fixed and movable cores, and is delivered at a constant flow rate according to the value of the electric current supplied to the solenoid coil. The pipe forming the body does not only accommodate the internal structures, such as the flow-regulating mechanism, the fixed core, and the movable core, but also serves as a part of the piping of the refrigeration cycle. The solenoid coil surrounds the pipe so that a structure, such as the mentioned body block can be dispensed with. Therefore, a substantial integration of the flow-regulating mechanism into the piping of the refrigeration cycle can be achieved. The flow-regulating expansion valve is very simple in construction. As the flow-regulating expansion valve is integrated in the piping of the refrigeration cycle, considerable mounting space for the flow-regulating expansion valve can be saved. The size of the flow-regulating expansion valve, a resulting reduction of material costs and manufacturing costs lower the costs of the flow-regulating expansion valve.

Embodiments of the invention will be described with reference to the drawings.

Fig. 1:     a cross-section of a first embodiment of a flow-regulating expansion valve in closed state,

Fig. 2:     a cross-section view of the first embodiment, in an open state,

Fig. 3: a diagram of the relation between the flow rate and the current of the first embodiment,

Fig. 4: a cross-section of a second embodiment, in one state,

Fig. 5: a cross-section of the second embodiment, in another state,

Fig. 6: a diagram of flow rate characteristics of the second embodiment,

Fig. 7: a cross-section of a variation of the second embodiment,

Fig. 8: a cross-section of a third embodiment, in one state,

Fig. 9: a cross-section of the third embodiment, in another state,

Fig. 10: a cross-section of a fourth embodiment, in one state,

Fig. 11: a cross-section of the fourth embodiment, in another state,

Fig. 12: a cross-section of a variation of the fourth embodiment,

Fig. 13: a cross-section of a fifth embodiment, in one state,

Fig. 14: a cross-section of the fifth embodiment, in another state,

Fig. 15: a cross-section of a sixth embodiment, in one state, and

Fig. 16: a cross section of the sixth embodiment, in another state.

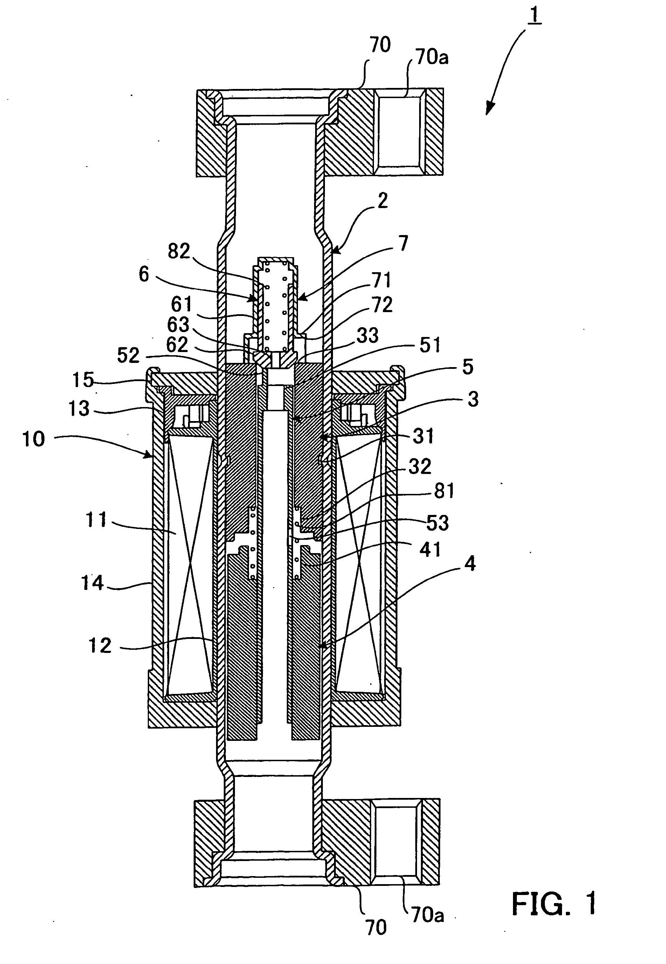

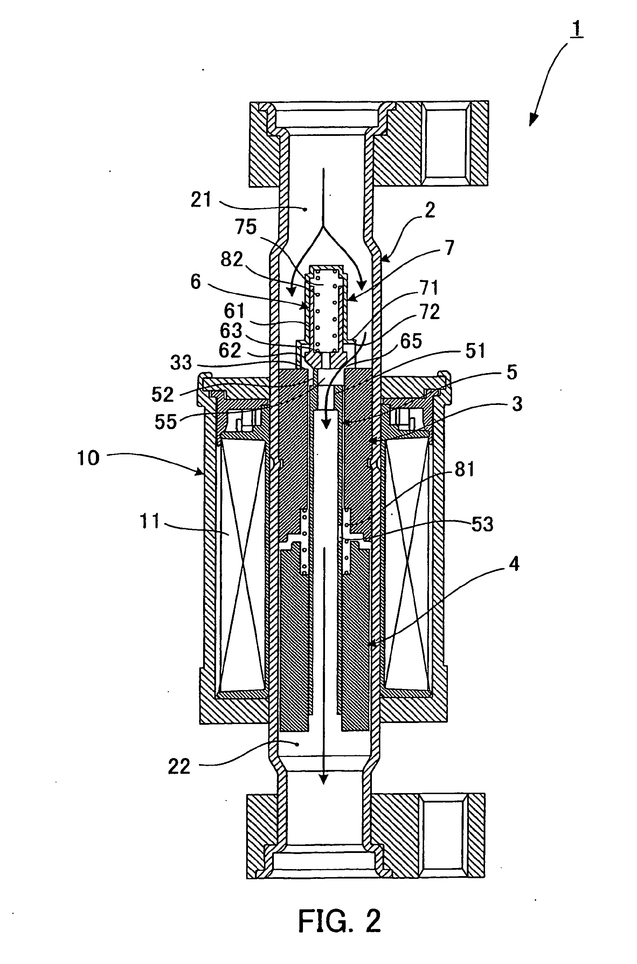

In Figs 1 and 2 a flow-regulating expansion valve 1 comprises a hollow cylindrical body formed by a pipe 2 having opposite open ends, a fixed core 3, a movable core 4, a hollow member 5, and a valve element 6, accommodated in the pipe 2, and a solenoid section 10 surrounding the periphery of the pipe 2.

Piping joints 70 of a generally oval shape are attached to the ends of the pipe 2. Each end is formed with a contracted part. The diameter of the contracted part is expanded after the piping joint 70 is fitted on the pipe 2. The piping joint 70 has a through hole 70a at a location outward of the pipe 2 for a bolt.

To connect the flow-regulating expansion valve 1 to the piping of the not shown refrigeration cycle, piping joints like the piping joint 70 are provided on opposed pipes. Associated piping joints are put into each other via an O ring, and are fixed to each other by inserting a bolt through the through holes and tightening a nut. The pipe 2 then forms part of a refrigerant passage. The fixed core 3 has a hollow cylindrical body with a circumferential groove 31. A downstream end of the fixed core 3 has an inner diameter increased by a predetermined amount to form a chamber 32 for a spring 81. The rim of an opening in an upstream end of the fixed core 3 forms a valve seat 33 for the valve element 6. The fixed core is fixed 3 in the pipe 2 by swaging a portion of the pipe 2 from the outside into the groove 31.

An upstream end face of the fixed core 3, there is mounted a hollow shaft 7 in the form of a bottomed and stepped hollow cylinder, which is closed on the upstream side. The hollow shaft 7 is expanded at part 71 and is mounted on the fixed core 3 such that an extreme end of the expanded part 71 surrounds the upstream-side opening of the fixed core 3. The hollow shaft 7 communicates with a refrigerant passage formed by the hollow member 5. The expanded part 71 has a predetermined opening 72 in a side surface for introducing refrigerant from upstream.

The movable core 4 has a hollow cylindrical body and is movably disposed in the pipe 2 of the fixed core 3. An upstream end of the movable core 4 has an increased inner diameter to form a chamber 41 for the spring 81 (elastic member) between the fixed and the movable cores 3, 4 such that the spring 81 extends through the chamber 32 into the fixed core 3 and through the chamber 41 into the movable core 4. The spring ends are fixed to the fixed and movable cores 3, 4, respectively. When the solenoid section 10 is not energized, the movable core 4 is supported with a predetermined interspace by the fixed core 3.

The hollow member 5 has a hollow cylindrical body with a downstream part inserted and rigidly fitted into the movable core 4. An upstream part is slidably fitted into the fixed core 3. The hollow member 5 has an upstream end restricted to form an orifice 51 (restriction) of a fixed passage cross-section. The hollow member 5 has three cylindrical support portions 52 extending upward from an upstream end face at circumferential intervals of 120 degrees, for supporting a valve portion 62, and also has a through hole 53 in a side wall so that a refrigerant pressure generated by moving the movable core 4 and the hollow member 5 in an area defined by the fixed core 3is released via the through hole 53 into the internal refrigerant passage.

The valve element 6 has a hollow cylindrical body and comprises a guide portion 61 hermetically guided by the hollow shaft 7, and the valve portion 62 continuously provided on the downstream side of the guide portion 61. The valve portion 62 can be seated on the valve seat 33 and has a larger outer diameter than the guide portion 61, and has tapered shape the diameter of which progressively decreases toward the downstream end. A smaller communication hole 63 than the inner diameter of the guide portion 61 extends axially through the valve portion 62 between the insides of the guide portion 61 and of the hollow shaft 7. The hollow shaft 7 contains an axial spring 82. The downstream spring end is held in contact with the upstream end face of the valve portion 62 and urges the valve element 6 downstream to constantly hold the downstream end face of the valve portion 62 in contact with the upstream end faces of the support portions 52 of the hollow member 5.

The solenoid section 10 is generally cylindrical and surrounds the pipe 2 from the outside. A first bobbin 12 with a solenoid coil 11 is disposed around the periphery of the pipe 2. On the upstream end of the first bobbin 12 is disposed a second bobbin 13 which forms with the first bobbin 12 a passage for a lead wire to a terminal of the solenoid coil 11. The bobbins 12, 13 are enclosed by a first yoke 14. The upstream end of the first yoke 14 is closed by a second yoke 15 to form a continuous magnetic circuit.

Fig. 1 shows a state of the de-energised solenoid coil 11, while Fig. 2 shows energised a state.

In Fig. 1, the valve element 6 is seated on the valve seat 33. The flow-regulating expansion valve 1 is in a fully-closed state.

When electric current i (Fig. 2) is supplied to the solenoid coil 11, a solenoid force is generated, the magnitude of which corresponds to the value of the electric current i. The movable core 4 is attracted toward the fixed core 3. A force moves the valve element 6 upward via the hollow member 5 against the urging forces of the springs 81 and 82. The valve element 6 is held in a position where the solenoid force and the loads of the springs 81 and 82 are balanced. A predetermined passage cross-section is formed between the valve element 6 and the valve seat 33.

High-pressure refrigerant from upstream is guided through the opening 72 of the hollow shaft 7, a refrigerant passage 65 between the valve element 6 and the valve seat 33, and gaps between adjacent pairs of support portions 52 into an intermediate area 55 immediately upstream of the upstream-side opening of the hollow member 5. The refrigerant is adiabatically expanded while passing through the orifice 51.

The refrigerant is also introduced through the communication hole 63 into an inner area 75 between the valve element 6 and the hollow shaft 7. The pressures in the intermediate area 55 and in the inner area 75 become equal to nullify or cancel the effect of the pressure or the valve element 6. The hollow member 5 only receives the load of the spring 82 from the valve element 6.

The pressure in a refrigerant inlet 21 is P1; the pressure in the intermediate area 55, which has been reduced due to passage of the refrigerant through the refrigerant passage 65, is P2, and the pressure in a refrigerant outlet 22, which pressure has been further reduced by the passage of the refrigerant through the orifice 51, is P3,. The effective pressure-receiving area of the valve portion 62 in the seated state (i.e. the passage cross-sectional area of the inner area 55) is A, and the passage cross-sectional area of the orifice 51 is C. The flow rate Gf is:

$$Gf = KC\,(P2 - P3) \quad \ldots (1)$$

(K is a flow coefficient of the refrigerant).

The solenoid force generated by the electric current i is f(i), and the sum of the forces of the springs 81 and 82, which act in the downstream direction, is fs. The relationship between forces acting on the hollow member 5 in upstream and downstream directions is

$$(A - C)(P2 - P3) = f(i) - fs \quad \ldots (2)$$

From (1) and (2), the flow rate Gf is:

$$Gf = (KC/(A - C))(f(i) - fs) \quad \ldots (3)$$

In the right side of (3), the parameters except the solenoid force f(i) are substantially fixed values, and therefore the flow rate Gf is held at a constant value proportional to the electric current i.

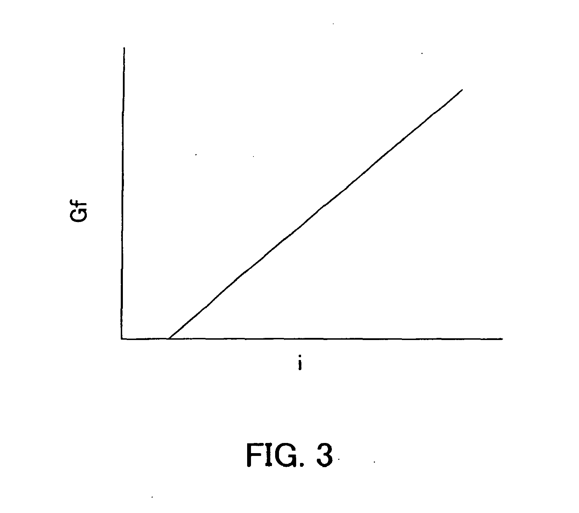

The operation of the flow-regulating expansion valve 1 is described based on the flow rate characteristic in Fig. 3. The abscissa represents the value of the electric current i. The ordinate represents the flow rate Gf. When the electric current i is zero, the valve element 6 is seated on the valve seat 33 due to the load fs. The flow-regulating expansion valve 1 is in a fully-closed state. The flow rate Gf is zero.

When a current i of e.g. 0.3 A is supplied to the solenoid coil 11, and a solenoid force f(i) larger than the load fs of the springs is applied to the hollow member 5, the valve element 6 is immediately moved from the seated position to the position where the solenoid force f(i) and the load fs are balanced, and is stopped there. Refrigerant starts to flow, and a differential pressure (P2 - P3) is generated across the orifice 51.

When the refrigerant flow rate on the upstream side of the refrigeration cycle is increased to raise the pressure P1 in the refrigerant inlet 21, the valve element 6 moves in valve-closing direction and reduces the effective pressure-receiving area to restrict the refrigerant flow rate, thereby holding the differential pressure (P2 - P3) at a constant level. When the refrigerant flow rate from upstream is reduced to lower the pressure P1 in the refrigerant inlet 21, the valve element 6 moves in valve-opening direction to increase the effective pressure-receiving area to increase the refrigerant flow rate, thereby holding the differential pressure (P2 - P3) across the orifice 51 at the constant level. The differential pressure (P2 - P3) is constantly controlled to a constant value according to the value of the electric current i.

The pipe 2 does not only accommodate the internal structures including the flow-regulating mechanism, the movable core 4, and the fixed core 3, but also serves as a part of piping of the refrigeration cycle. As the solenoid section 10 surrounds the pipe 2 from the outside, the flow-regulating mechanism is substantially integrated into the piping of the refrigeration cycle. Hence the flow-regulating expansion valve 1 has a very simple and fair cost construction

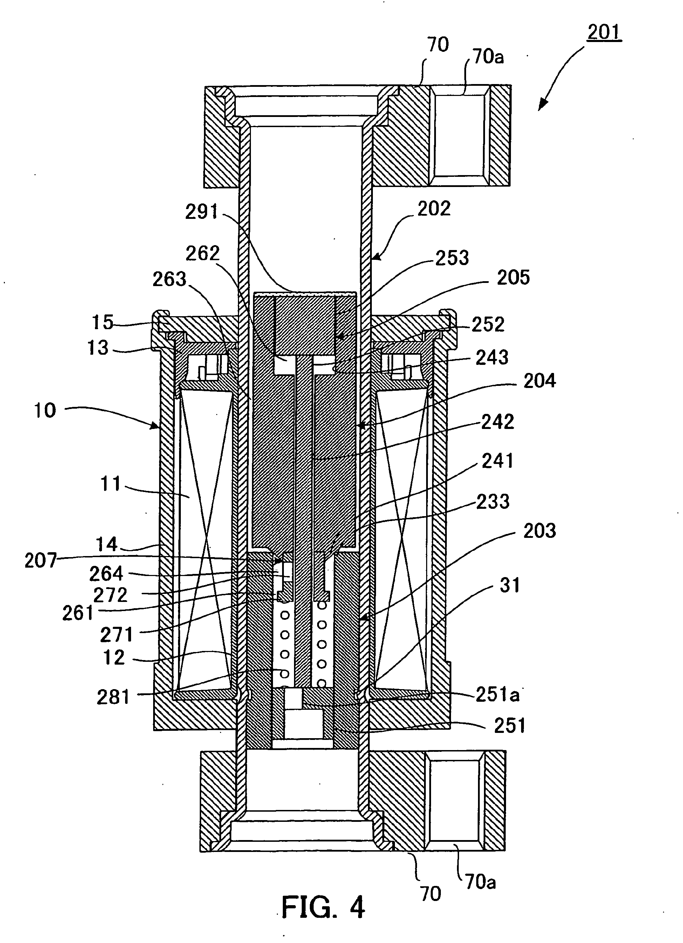

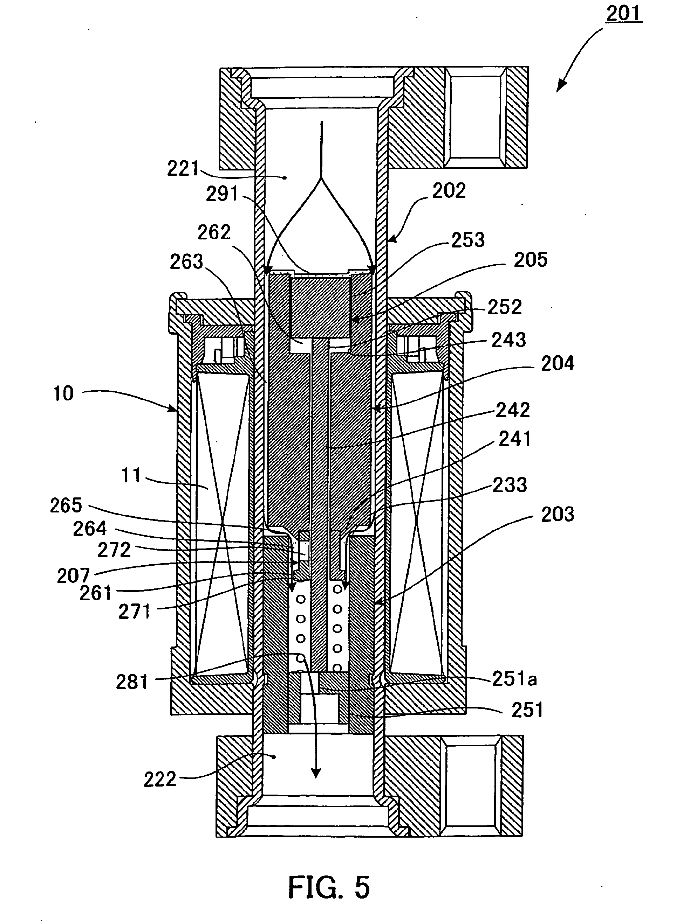

In Figs 4 and 5, the flow-regulating expansion valve 201 has a hollow cylindrical pipe 202 accommodating a fixed core 203, a movable core 204, and a solid shaft 205. The solenoid section 10 surrounds the periphery of the pipe 202. The pipe 202 has enlarged opposite ends and caries the joints 70.

The fixed core 203 has a hollow cylindrical body with the circumferentially peripheral groove 31. A bottomed cylindrical stopper 251 is fitted in a downstream end, for supporting a spring 281, and the solid shaft 205 from below. The stopper 251 has in an upstream-side bottom a communication hole 251 a forming a part of a refrigerant passage through the flow-regulating expansion valve 201. The rim of an opening in an upstream end of the fixed core 203 forms a valve seat 233.

The movable core 204 has a stepped hollow cylindrical body the inner diameter of which is increased at an upstream end, and is disposed in the pipe 202 upstream of the fixed core 203. The movable core 204 has a tapered downstream end the outer diameter of which progressively decreases downstream and which forms a valve portion 241 for the valve seat 233. The movable core 204 has a small-bore part 242 and a large-bore part 243 upstream of the small-bore part 242, and the solid shaft 205 is inserted in these parts 242 and 243. Between the movable core 204 and the inner wall of the pipe 202, there is formed a refrigerant passage 263. A non-magnetic member hollow cylinder 207 continuous with the movable core 204 extends downstream from the extreme end of the valve portion 241.

The non-magnetic member 207 is inserted into the fixed core 203 and has at a downstream end circumferential a flange 271 extending radially outward to form a restriction 261 between the non-magnetic member 207 and the inner wall of the fixed core 203. A side wall of the non-magnetic member 207 has a through hole 272 of predetermined size, for introducing part of the refrigerant from an intermediate area 264 between the non-magnetic member 207 and the fixed core 203 into the member 207.

The spring 281 (elastic member) between the downstream end face of the non-magnetic member 207 and the upstream end face of the stopper 251 urges the movable core 204 in upstream direction, i.e. in valve-opening direction via the non-magnetic member 207. When the solenoid section 10 is de-energised, the movable core 204 is supported with a predetermined interspace by the fixed core 203.

The solid shaft 205 is a stepped column. The lower end of a small-diameter part 252 is fixed to the upstream end face of the stopper 251. The small-diameter part 252 has the movable core 204 and the non-magnetic member 207 fitted thereon to guide them. A large-diameter part 253 formed in the upstream end of the solid shaft 205 not only guides the large-bore part 243 of the movable core 204, but also defines a predetermined inner space 262 between the junction (stepped portion) of the small-diameter part 252 and the large-diameter part 253, and the movable core 204.

Further, a polyimide film 291 (sealing member) is provided on the upstream end faces of the movable core 204 and of the solid shaft 205 in a manner hermetically covering these, thereby preventing refrigerant within the inner space 262 from flowing out upstream through a gap between the large-diameter part 253 and the inner wall of the movable core 204.

Fig. 5 shows the open state, while Fig. 4 shows the fully-closed state.

In Fig. 5, (de-energised sate) the valve portion 241 is held away from the valve seat 233. The flow-regulating expansion valve 201 is in its open state.

When an electric current i is supplied to the solenoid coil 11, a solenoid force the magnitude of which corresponds to the value of the electric current i is generated. The movable core 204 is attracted toward the fixed core 203. The force acts in the direction of seating the valve portion 241 against the urging force of the spring 281. The valve portion 241 is held in a position where the solenoid force and the load of the spring 281 are balanced. A predetermined passage cross-section is formed between the valve portion 241 and the valve seat 233.

High-pressure refrigerant from upstream is introduced through the refrigerant passage 263 and a refrigerant passage 265 between the valve portion 241 and the valve seat 233 into the intermediate area 264. The refrigerant is adiabatically expanded through the restriction 261 and flows downstream through the communication hole 251 a.

Part of the refrigerant introduced into the intermediate area 264 is guided through the through hole 272 and a clearance between the solid shaft 205 and the movable core 204 into the inner space 262. The pressures in the intermediate area 264 and in the inner space 262 become equal. The pressure from upstream, which is prevailing immediately upstream of the refrigerant passage 265, is held equal to an inlet pressure. Therefore, part of pressure applied to the movable core 204 including the non-magnetic member 207 is cancelled.

The pressure in a refrigerant inlet 221 is P1, the pressure in the intermediate area 264, which has been reduced due to passage of the refrigerant through the refrigerant passage 265, is P2, and the pressure in a refrigerant outlet 222, which has been further reduced due to passage of the refrigerant through the restriction 261, is P3. The effective pressure-receiving area of the valve portion 241 in a seated state (i.e. the cross-sectional area of the fixed core 203) is A, and the passage cross-sectional area of the restriction 261 is C. The flow rate Gf is:

$$Gf = KC\,(P2 - P3) \quad \ldots (4)$$

where K represents a flow coefficient of the refrigerant.

The solenoid force generated by the electric current i is f(i), and the load of the spring 281, which acts in the upstream direction, is fs. The relationship between the forces acting on the non-magnetic member 207 and the movable core 204 in the upstream and downstream directions is then:

$$(A - C)(P2 - P3) = fs - f(i) \ldots (5)$$

From (4) and (5), the flow rate Gf is:

$$Gf = (KC/(A - C))(fs - f(i)) \quad \ldots (6)$$

In the right side (6), the parameters except the solenoid force f(i) are substantially fixed values, and therefore the flow rate Gf is held at a constant value proportional to the electric current i.

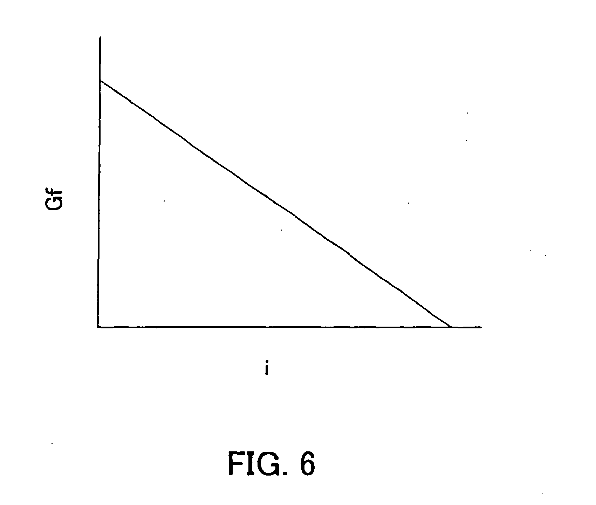

The flow-regulating expansion valve 201 operates with a flow rate characteristic as shown in Fig. 6. The abscissa represents the value of the electric current I, and the ordinate represents the flow rate Gf. When the electric current i is zero, the valve portion 241 of the movable core 204 is in its open state due to the load fs of the spring 281 to hold the flow-regulating expansion valve 201 in a fully-open state. The flow rate Gf assumes a maximum value determined by the load fs. When the refrigerant flows, a differential pressure (P2 - P3) is generated across the restriction 261.

When the electric current i is supplied, the movable core 204 is moved in valve-closing direction to the position where the solenoid force f(i) and the load fs are balanced, and is stopped there.

The differential pressure (P2 - P3) across the restriction 261 is held at a constant level, as described earlier.

When the electric current i exceeds a predetermined value, the flow-regulating expansion valve 201 is fully closed (Fig. 4).

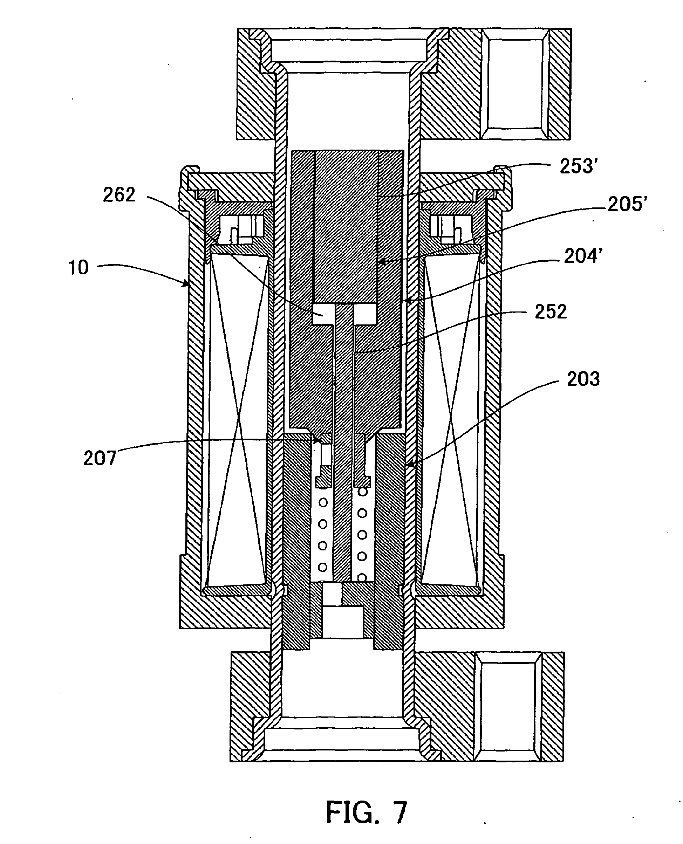

Although the polyimide film 291 is mentioned covering the upstream end faces of the movable core 204 and of the solid shaft 205, it is possible to dispense with such a sealing member, as shown in Fig. 7.

There the axial length of a large-diameter part 253' of a solid shaft 205' and that of the upstream end of the movable core 204' in which the large-diameter part 253' is inserted are each set to be equal to or larger than a predetermined length to increase the respective axial lengths of sliding surfaces of the two slidably fitted components, whereby leakage from the inner space 262 in the upstream direction is prevented or suppressed.

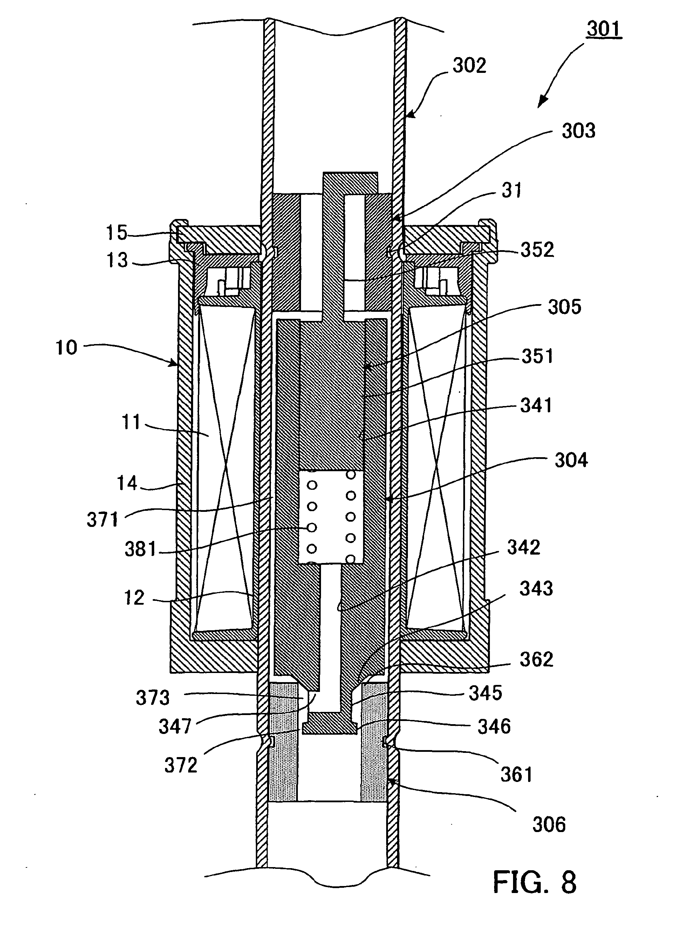

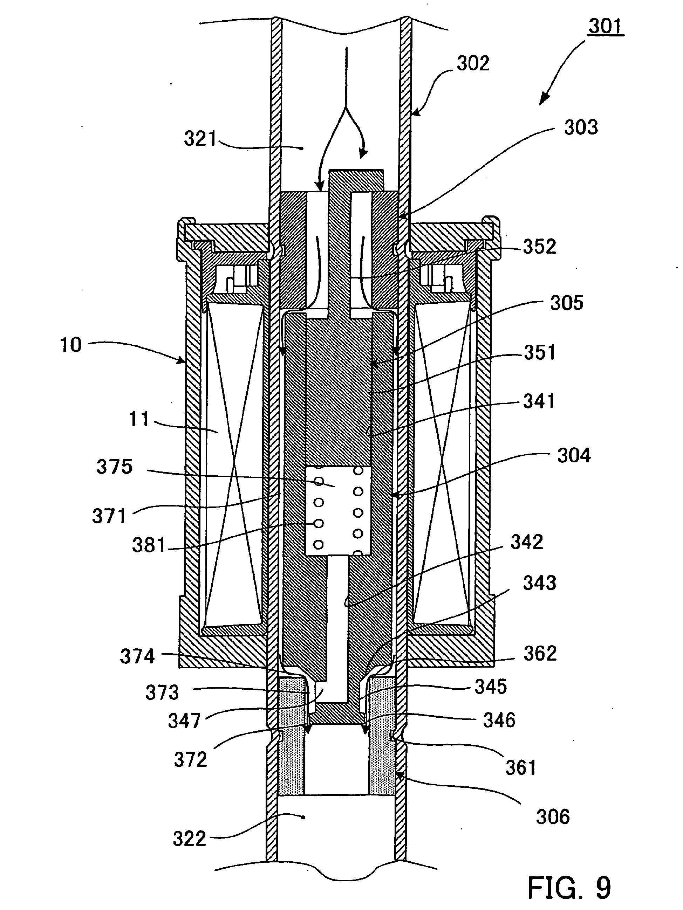

In Figs 8; and 9 the flow-regulating expansion valve 301 has a hollow cylindrical pipe 302 as a part of the piping of the refrigeration cycle. The pipe 302 accommodates a fixed core 303, a movable core 304, a solid shaft 305, and a hollow cylindrical member 306. The solenoid section 10 surrounds the periphery of the pipe 302. The fixed core 303 has a hollow cylindrical body of a predetermined inner diameter. One end of the solid shaft 305 is secured to the upstream end of the fixed core 303 in a suspended manner.

The solid shaft 305 is a stepped cylinder and comprises a large-diameter part 351 with an outer diameter substantially equal to the inner diameter of the movable core 304, and with a small-diameter part 352 smaller in diameter than the large-diameter part 351. The large-diameter part 351 is located downstream of the fixed core 303, and the small-diameter part 352 extends through the fixed core 303 such that a refrigerant passage is formed. The upstream end of the small-diameter part 352 extends at right angles to the axis of the solid shaft 305, with its extreme end fixed to the fixed core 303.

The movable core 304 has a stepped hollow cylindrical body in which an upstream part has an increased inner diameter, disposed in the pipe 302 downstream of the fixed core 303. The large-diameter part 351 is a guide for the movable core 304 and is inserted in a large-bore part 341 of the movable core 304. Downstream of the large-bore part 341, there is formed a small-bore part 342 smaller in inner diameter than the large-bore part 341, for communication with the downstream side. The movable core 304 downstream end is tapered with the outer diameter progressively decreasing downstream. The tapered downstream end forms a valve portion 343. Between the movable core 304 and the inner wall of the pipe 302, there is formed a clearance passage 371.

The hollow cylindrical member 306, which is similar to the fixed core 303, has a circumferential peripheral groove 361. A portion of the pipe 302 is swaged into the fitting groove 361 from the outside. The rim of an opening in an upstream end of the hollow cylindrical member 306 forms a valve seat 362 for the valve portion 343.

A bottomed hollow cylinder flow-reducing portion 345 extends downstream from the extreme end of the valve portion 343. A flange 346 projects radially outward from the extreme end of the flow-reducing portion 345. Between the flange 346 and the inner wall of the hollow cylindrical member 306, there is formed a restriction 372. The flow-reducing portion 345 has in a side wall a communication hole 347 of predetermined size between an intermediate area 373 defined between the flow-reducing portion 345 and the hollow cylindrical member 306, and the small-bore part 342 of the movable core 304.

A spring 381 (elastic member) between a stepped portion formed at the junction between the large-bore part 341 and the small-bore part 342 and the downstream end face of the solid shaft 304 urges the movable core 304 downstream, i.e. in valve-closing direction to close the valve when the solenoid section 10 is de-energised.

Fig. 8 shows the non-energised state, while Fig. 9 shows the energised state.

Without electric current the valve portion 343 is seated on the valve seat 362 (fully-closed state).

When an electric current i is supplied to the solenoid coil 11, a solenoid force the magnitude of which corresponds to the value of the electric current i is generated. The movable core 304 is attracted toward the fixed core 303. The valve portion 343 is held in a position where the solenoid force and the load of the spring 381 are balanced. A predetermined passage cross-section is formed between the valve portion 343 and the valve seat 362.

High-pressure refrigerant from upstream is introduced through a gap between the fixed core 303 and the movable core 304, the clearance passage 371, and the refrigerant passage 374 between the valve portion 343 and the valve seat 362 into the intermediate area 373. The refrigerant is adiabatically expanded through the restriction 372, and flows downstream.

Part of the refrigerant introduced into the intermediate area 373 is also introduced through the communication hole 347 and the small-bore part 342 into an inner space 375 formed between the movable core 304 and the solid shaft 305. The pressures in the intermediate area 373 and in the inner space 375 become equal. At least a part of the pressure applied to the movable core 304 is cancelled.

The pressure in a refrigerant inlet 321 is P1, the pressure in the intermediate area 373, which has reduced due to passage of the refrigerant through the refrigerant passage 374 is P2, and the pressure in a refrigerant outlet 322, which has further reduced due to passage of the refrigerant through the restriction 372 is P3. The effective pressure-receiving area of the seated valve portion 343 (i.e. the cross-sectional area of the hollow cylindrical member 306) is A, and the passage cross-sectional area of the restriction 372 is C. The flow rate Gf is:

$$Gf = KC \, (P2 - P3) \quad ... (7)$$

where K represents a flow coefficient of the refrigerant.

The solenoid force generated by the electric current i is f(i), and the load of the spring 381, which acts in the upstream direction, is fs, and the relationship between the forces acting on the movable core 304 in the upstream and downstream directions is represented by the following equation:

$$(A - C)(P2 - P3) = f(i) - fs \quad ... (8)$$

From (7) and (8), the flow rate Gf is:

$$Gf = (KC/(A - C))(f(i) - fs) \quad ... (9)$$

In the right side of (9), the parameters except the solenoid force f(i) are substantially fixed values, and therefore the flow rate Gf is held at a constant value proportional to the electric current i.

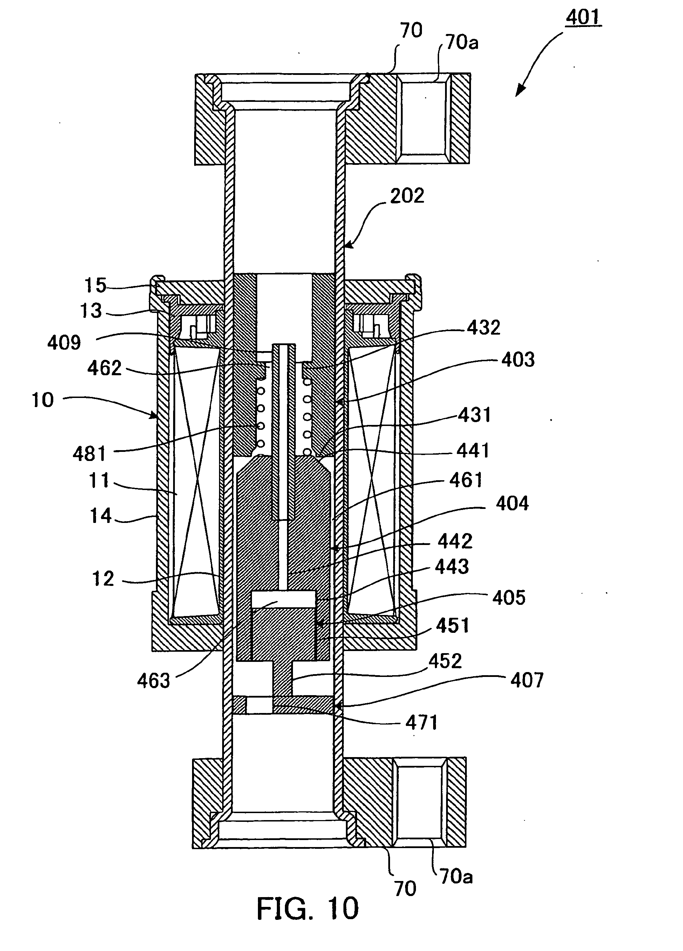

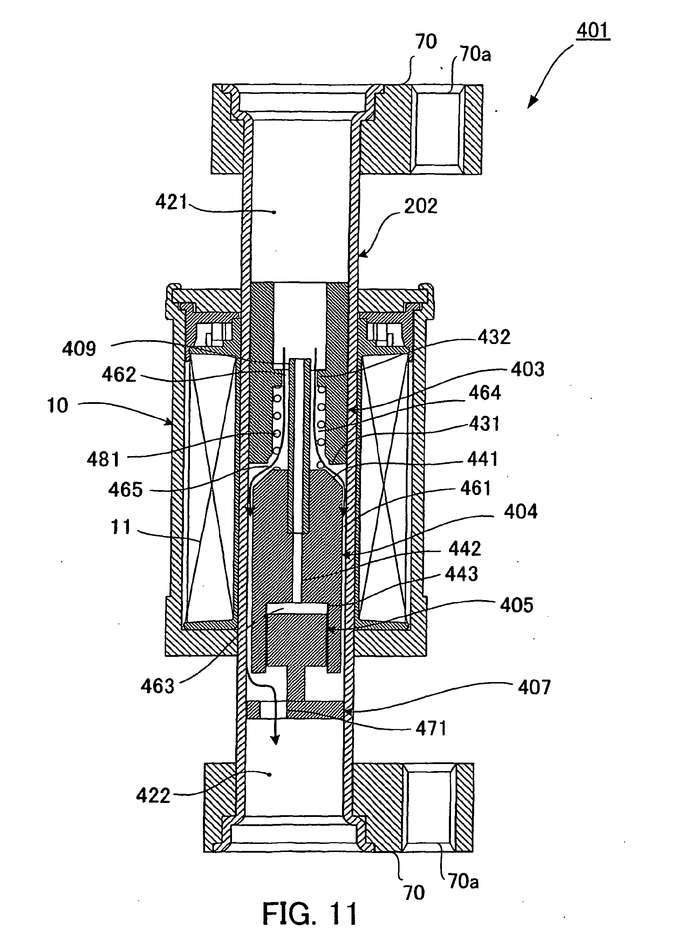

In Figs 10, 11,, the flow-regulating expansion valve 401 has a hollow cylindrical pipe 202 accommodating a fixed core 403, a movable core 404, and a solid shaft 405. The solenoid section 10 surrounds the periphery of the pipe 202.

The fixed core 403 has a hollow cylindrical body and is press-fitted into the pipe 202. The rim of an opening in a downstream end of the fixed core 403 forms a valve seat 431. A flange 432 protruding radially inward is formed at an axially intermediate portion.

The movable core 404 has a stepped hollow cylindrical body the inner diameter of which is increased at a downstream end, and is disposed in the pipe 202 downstream of the fixed core 403. The movable core 404 has a tapered upstream end the outer diameter of which progressively decreases upstream. The tapered upstream end forms a valve portion 441 for the valve seat 431. The movable core 404 has a small-bore part 442 and a large-bore part 443 downstream of the small-bore part 442. The solid shaft 405 is inserted into the large-bore part 443. Between the movable core 404 and the inner wall of the pipe 202, there is formed a clearance passage 461.

A pressure-equalizing pipe 409 (hollow cylinder) is fitted into the end of the valve portion 441 and extends into the fixed core 403. The extreme end of the pressure-equalizing pipe 409 reaches to a location slightly upstream of the flange 432 to form a restriction 462 between the flange 432 and the pressure-equalizing pipe 409. A spring 481 (elastic member) between the flange 432 and the upstream end face of the movable core 404, with opposite ends fixed to the fixed core 403 and the movable core 404, respectively, supports the movable core 404 with a predetermined interspace by the fixed core 403 when the solenoid section 10 is de-energised.

The solid shaft 405 is a stepped column, with a large-diameter part 451 fitted in the large-bore part 443 of the movable core 404 to guide the movable core 404. A continuous small-diameter part 452 downstream of the large-diameter part 451 is fixed with the lower end to a disk-shaped stopper 407 rigidly press-fitted into the pipe 202. The stopper 407 has an axial communication hole 471 forming a part of a refrigerant passage. Between a stepped portion at the junction of the large-bore part 443 of the movable core 404 and the small-bore part 442 and the upstream end face of the solid shaft 405, there is formed an inner space 463 communicating with the refrigerant passage via the small-bore part 442 and the pressure-equalizing pipe 409. The cross-sectional area of the inner space 463 is equal to that of the lower end of an intermediate area 464.

Fig. 11 shows the open state, while Fig. 10 shows the fully-closed state.

In Fig. 11, (de-energised state) the valve portion 441 is held away from the valve seat 431. The flow-regulating expansion valve 401 is in the open state.

When an electric current i is supplied, a solenoid force the magnitude of which corresponds to the value of the electric current i is generated. The movable core 404 is attracted toward the fixed core 403. A force acting in the direction of seating the valve portion 441 against the urging force of the spring 481 is generated. The valve portion 441 is held in a position where the solenoid force and the load of the spring 481 are balanced. A predetermined passage cross-section is formed between the valve portion 441 and the valve seat 431.

High-pressure refrigerant from upstream is adiabatically expanded through the restriction 462 and reaches the intermediate area 464. Further, the refrigerant passes through a refrigerant passage 465 between the valve portion 441 and the valve seat 431, and the clearance passage 461, and flows downstream through the communication hole 471.

The pressure in the. inner space 463 is equal to an inlet pressure via the pressure-equalizing pipe 409, and hence part of refrigerant pressure applied to the movable core 404 including the pressure-equalizing pipe 409 is cancelled.

The pressure in a refrigerant inlet 421 is P1, the pressure in the intermediate area 464, which has been reduced due to passage through the restriction 462 is P2, and the pressure in a refrigerant outlet 422, which has been further reduced due to passage through the refrigerant passage 465 is P3. The effective pressure-receiving area of the seated valve portion 441 (i.e. the cross-sectional area of the lower end of the intermediate area 464, which is equal to that of the inner space 463) is A, the cross-sectional area of a circle having the outer diameter of the pressure-equalizing pipe 409 B, and the passage cross-section of the restriction 462 is C. The flow rate Gf is:

$$Gf = KC\ (P1 - P2) \quad \dots (10)$$

where K represents a flow coefficient of the refrigerant.

The solenoid force generated by the electric current i is f(i), and the load of the spring 481, which acts in the upstream direction, is fs. The relationship between the forces acting on the movable core 404 in the upstream and downstream directions is:

$$(A - B)(P1 - P2) = fs - \ f(i) \dots (11)$$

From (10) and (11), the flow rate Gf is:

$$Gf = (KC/(A - B))(fs - f(i)) \quad \dots (12)$$

In the right side of (12), the parameters except the solenoid force f(i) are substantially fixed values, and therefore the flow rate Gf is held at a constant value proportional to the electric current i.

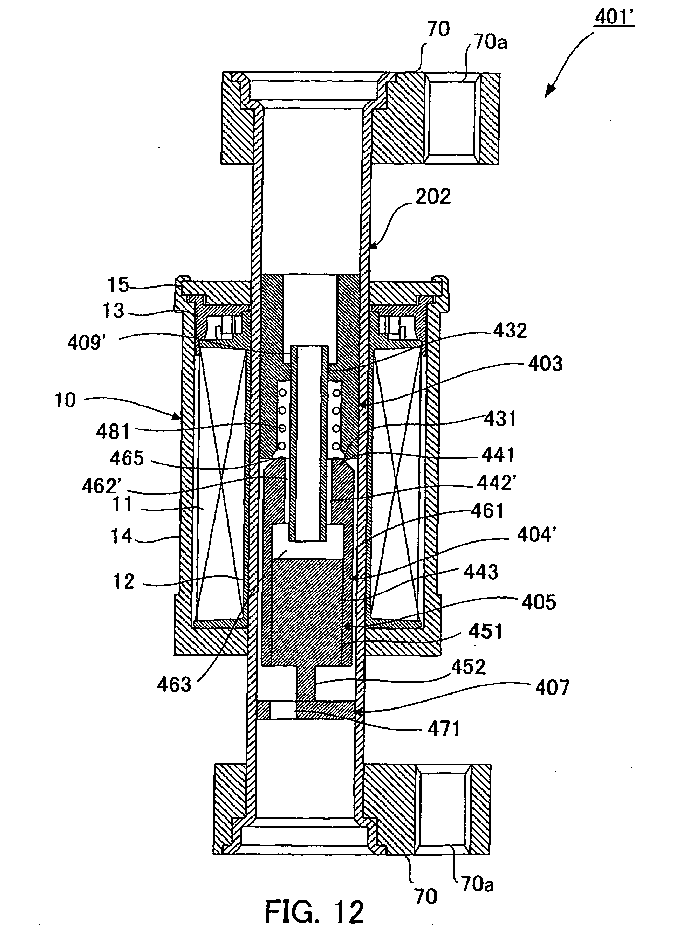

Although in the Figs 10, 11, the pressure-equalizing pipe 409 extends from the movable core 404 such that the restriction 462 is formed between the pressure-equalizing pipe 409 and the flange 432, a variation as shown in Fig. 12 can also be employed.

In the flow-regulating expansion valve 401' in Fig. 12, a passage pipe 409' extending into the inner space 463 of the movable core 404' is rigidly fitted in the flange 432 of the fixed core 403. A restriction 462' is formed between the passage pipe 409' and the inner wall of a small-bore part 442' of the movable core 404'.

High-pressure refrigerant from upstream is adiabatically expanded through the restriction 462' via the inner space 463. Then, the refrigerant passes through the refrigerant passage 465 between the valve portion 441 and the valve seat 431, and the clearance passage 461, and flows downstream through the communication hole 471.

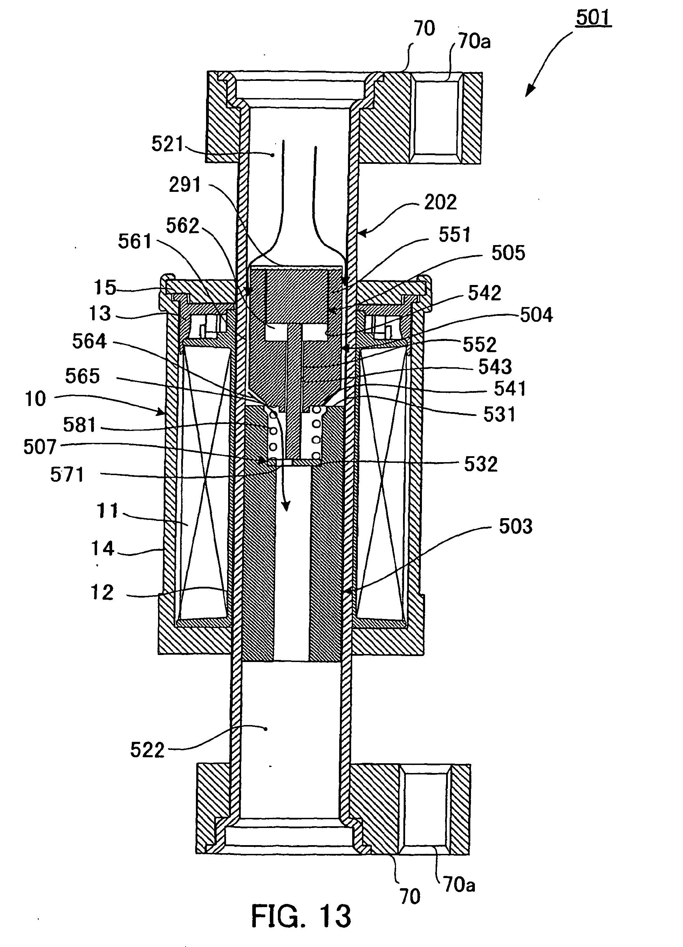

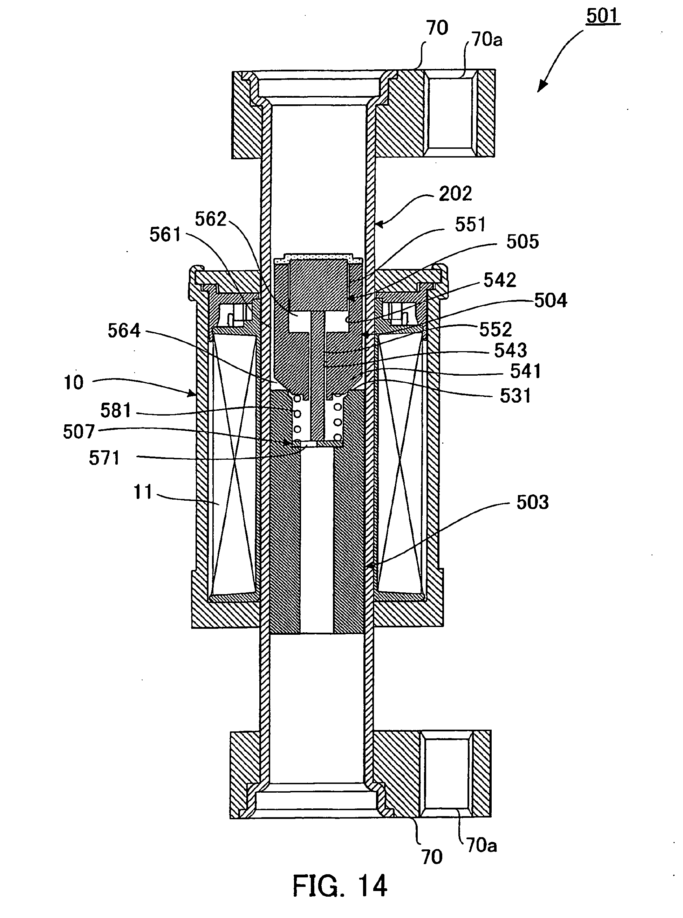

In Figs 13, 14, the flow-regulating expansion valve 501 has a hollow cylinder pipe 202 accommodating a fixed core 503, a movable core 504, and a solid shaft 505. The solenoid section 10 surrounds the periphery of the pipe 202.

The fixed core 503 has a hollow cylindrical body and is press-fitted into the pipe 202. The rim of an opening in an upstream end of the fixed core 503 forms a valve seat 531, and the inner diameter is slightly reduced downstream of the valve seat 531 to form a stepped portion 532. The stepped portion 532 contains a disk-shaped stopper 507. The stopper 507 has an axial communication hole 571 as a part of a refrigerant passage.

The movable core 504 has a stepped hollow cylinder body the inner diameter of which is increased at an upstream end, and is disposed in the pipe 202 upstream of the fixed core 503. The movable core 504 downstream end is tapered such that the outer diameter progressively decreases downstream. The tapered downstream end forms a valve portion 541 for the valve seat 531. The movable core 504 has a large-bore part 542 and a small-bore part 543 downstream of the large-bore part 542, through which the solid shaft 505 extends. A restriction 561 is formed between the movable core 504 and the inner wall of the pipe 202.

The movable core 504 has a flat face orthogonal to the axis at a downstream extreme end. A spring 581 (elastic member) between the flat face and the upstream end face of the stopper 507 acts such that the movable core 504 is supported with a predetermined interspace by the fixed core 503 in the de-energised state.

The solid shaft 505 is a stepped column, and the lower end of a small-diameter part 552 is fixed to the upstream end face of the stopper 507. The small-diameter part 552 guides the movable core 504. A large-diameter part 551 in the upstream end of the solid shaft 505 guides the large-bore part of the movable core 504, and defines a predetermined inner space 562 between a stepped portion formed at the junction between the small-diameter part 552 and the large-diameter part 551 of the solid shaft 505 and the movable core 504. A hermetically sealing polyimide film 291 is provided on the upstream end face of the movable core 504 and the upstream end face of the solid shaft 505.

Fig. 13 shows the open state, while Fig. 14 shows the fully-closed state.

In Fig. 13, the valve portion 541 is held away from the valve seat 531 to hold the flow-regulating expansion valve 501 in its open state.

When an electric current i is supplied, a solenoid force the magnitude of which corresponds to the value of the electric current i is generated. A force acting in the direction of seating the valve portion 541 of the movable core 504 against the urging force of the spring 581 is generated. The valve portion 541 is held in a position where the solenoid force and the load of the spring 581 are balanced. A predetermined passage cross-section is formed between the valve portion 541 and the valve seat 531.

High-pressure refrigerant from upstream is adiabatically expanded through the restriction 561 and is introduced into an intermediate area 564. The refrigerant also flows downstream via a refrigerant passage 565 between the valve portion 541 and the valve seat 531, and the communication hole 571. Part of the refrigerant passing through the intermediate area 564 is introduced through a clearance between the small-diameter part 552 and the movable core 504 into the inner space 562. An outlet pressure downstream of the intermediate area 564 and the pressure in the inner space 562 become equal. Part of the pressures applied to the movable core 504 is cancelled.

The pressure at a refrigerant inlet 521 P1, is the pressure in the intermediate area 564, which has been reduced due to passage of the refrigerant through the restriction 561 is P2, and the pressure in a refrigerant outlet 522, which has been further reduced due to passage of the refrigerant through the refrigerant passage 565 is P3. The effective pressure-receiving area of the seated valve portion 541 (i.e. the cross-sectional area of the inner space 562) is A, the area of the circle having the outer diameter of the upstream end face of the movable core 504 is B, and the passage cross-sectional area of the restriction 561 is C. The flow rate Gf is:

$$Gf = KC\,(P1 - P2) \qquad \dots (13)$$

where K represents a flow coefficient of the refrigerant.

The solenoid force generated by the electric current i is f(i), and the load of the spring 581, which acts in the upstream direction, is fs. The relationship between the forces acting on the movable core 504 in the upstream and downstream directions is:

$$(B - A)(P1 - P2) = fs - f(i) \qquad \dots (14)$$

From (13) and (14), the flow rate Gf is:

$$Gf = (KC/(B - A))(fs - f(i)) \qquad \dots (15)$$

In the right side (15), the parameters except the solenoid force f(i) are substantially fixed values, and therefore the flow rate Gf is held at a constant value proportional to the electric current i.

When the electric current i exceeds a predetermined value, the flow-regulating expansion valve 501 is fully closed (Fig. 14).

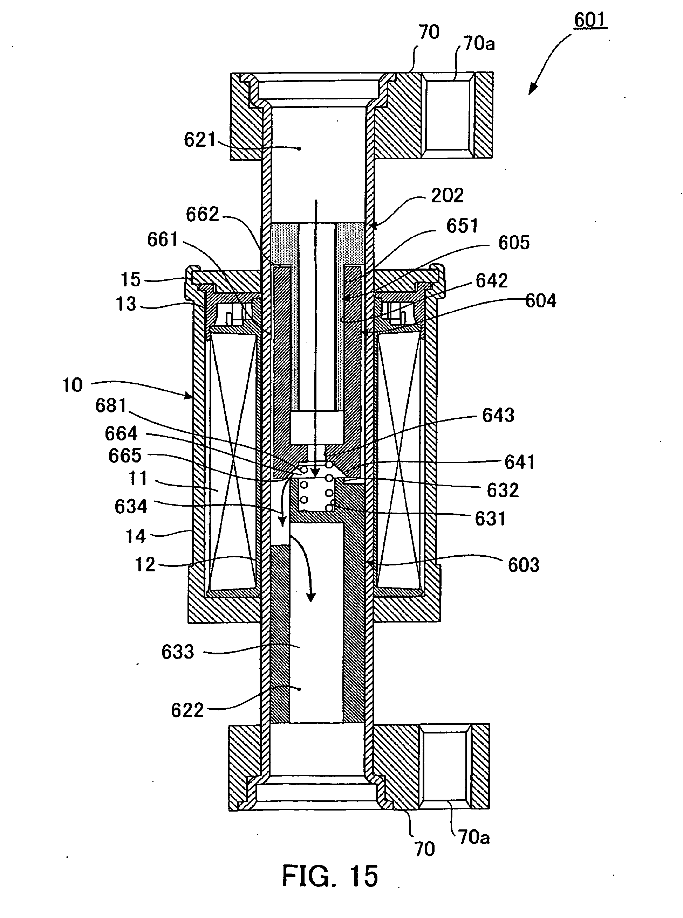

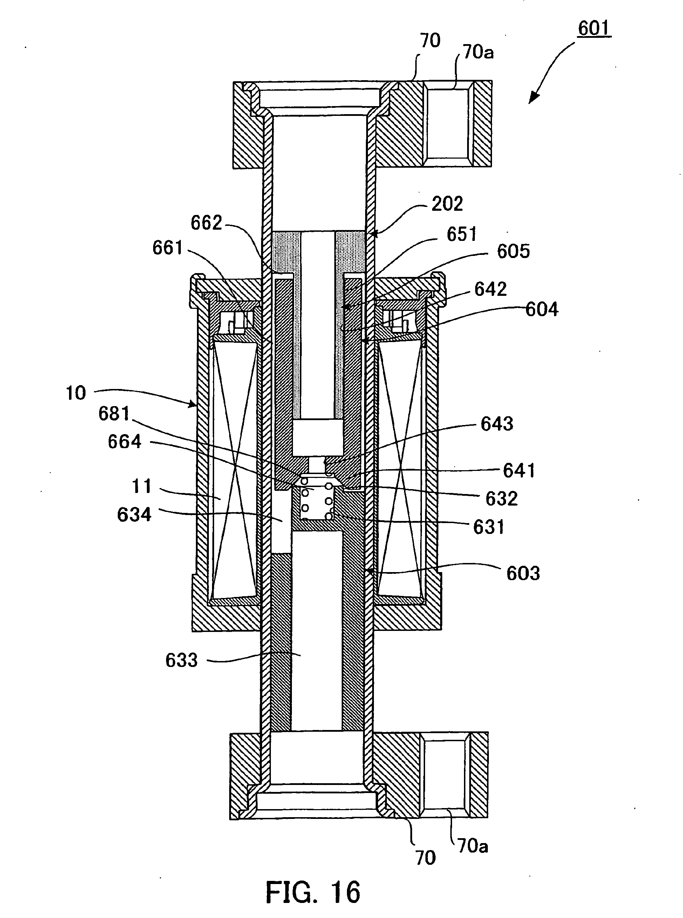

In Figs 15, 16, the flow-regulating expansion valve 601 has the hollow cylinder pipe 202 accommodating a fixed core 603, a movable core 604, and a hollow cylindrical member 605. The solenoid section 10 surrounds the periphery of the pipe 202.

The fixed core 603 has a bottomed hollow cylinder body having the bottom at the upstream end. The body is press-fitted into the pipe 202. The fixed core 603 has a circular recess 631 at the upstream end, for accommodating a part of a spring 681. A valve seat 632 is integrally formed with the rim of an opening of the recess 631, protruding upstream. A communication hole 634 is provided in the side wall of the upstream end of the fixed core 603 between an internal refrigerant passage 633 and the upstream side.

The movable core 604 has a stepped hollow cylinder body which has a stepped portion at its downstream end, disposed in the pipe 202 upstream of the fixed core 603. The movable core 604 has a large-bore part slidably fitted on a hollow cylindrical shaft part extending downstream from the hollow cylindrical member 605 fixed in the pipe 202 further upstream of the movable core 604. In the centre of the stepped portion of the movable core 604, i.e. in the bottom of the large-bore part, is a circular restriction 643. The downstream end face of the movable core 604 in which the restriction 643 opens has a flat portion for the spring 681, and a tapered portion the diameter of which progressively increases downstream forms a valve portion 641 for the valve seat 632.

The spring 681 (elastic member) is interposed between the downstream end face of the movable core 604 and the recess 631 of the fixed core 603. In de-energised state, the movable core 604 is supported with a predetermined interspace by the fixed core 603. Between the movable core 604 and the pipe 202 is a predetermined clearance 661.

Fig. 15 shows the open state, while Fig. 16 shows the fully-closed state.

In Fig. 16, (de-energised state) the valve portion 641 is held away from the valve seat 632. The flow-regulating expansion valve 601 is in the fully-open state.

When electric current i is supplied, a solenoid force is generated. A force acting in the direction of seating the valve portion 641 against the urging force of the spring 681 is generated. The valve portion 641 is held in a position where the solenoid force and the load of the spring 681 are balanced. A predetermined passage cross-section is formed between the valve portion 641 and the valve seat 632.

High-pressure refrigerant from upstream is adiabatically expanded through the restriction 643 and is then introduced into an intermediate area 664 between the downstream end face of the movable core 604 and the recess 631 of the fixed core 603. Further, the refrigerant flows downstream via a refrigerant passage 665 between the valve portion 641 and the valve seat 632, the communication hole 634, and the internal refrigerant passage 633.

Part of the refrigerant passing through the intermediate area 664 is introduced through the clearance 661 into an inner space 662 between the hollow cylindrical member 605 and the upstream end face of the movable core 604. Consequently, part of the refrigerant pressure applied to the movable core 604 is cancelled.

The pressure at a refrigerant inlet 621 is P1, the pressure in the intermediate area 664, which has been reduced due to passage of the refrigerant through the restriction 643 is P2, and the pressure in a refrigerant outlet 622, which has been further reduced due to passage of the refrigerant through the refrigerant passage 665 is P3. The effective pressure-receiving area of the seated valve portion 641 (i.e. the cross-sectional area of the movable core 604) is A, and the passage cross-sectional area of the restriction 643 is C. The flow rate Gf is:

$$Gf = KC\,(P1 - P2) \qquad \ldots (16)$$

where K represents a flow coefficient of the refrigerant.

The solenoid force generated is f(i), and the load of the spring 681, which acts in the upstream direction, is fs. The relationship between the forces acting on the movable core 604 in the upstream and downstream directions is:

$$(A - C)(P1 - P2) = fs - f(i) \qquad \ldots (17)$$

From (16) and (17), the flow rate Gf is:

$$Gf = (KC/(A - C))(fs - f(i)) \qquad \ldots (18)$$

In the right side of (18), the parameters except the solenoid force f(i) are substantially fixed values, and therefore the flow rate Gf is held at a constant value proportional to the electric current i supplied to the solenoid coil 11.

When the electric current i exceeds a predetermined value, the flow-regulating expansion valve 601 is fully closed (Fig. 16).

**Claims**

1. A flow-regulating expansion valve (1, 201, 301, 401, 501, 601) for a refrigerant passage of a refrigeration cycle, for decompressing refrigerant by adiabatic expansion, and delivering refrigerant at a flow rate set by a value of an electric current (i) supplied to a solenoid coil (11), the flow-regulating expansion valve comprising:

   a pipe (2, 202, 302) forming a part of the refrigerant passage;
   a fixed hollow cylindrical core (3, 203, 303, 403, 503, 603) in the pipe;
   an axially movable hollow cylindrical core (4, 204, 304, 404, 504, 604) in the pipe opposed to the fixed core;
   the solenoid coil (11) circumferentially surrounding the pipe, for defining a magnetic circuit to generate a solenoid force with a magnitude corresponding to the value of the supplied electric current to move the movable core to a predetermined reference position with respect to the fixed core; and
   a flow-regulating mechanism including a movable valve element urged in one moving direction by an elastic member, and a stationary valve seat in the pipe, for performing valve-opening and valve-closing operations when the movable core moves to and from the predetermined reference position to adjust an internal passage cross-section determining the flow rate through the flow regulating mechanism,
   **characterised in that**
   a restriction (51, 26, 372, 462, 462', 561, 643) of the flow-regulating mechanism is formed by a fixed passage of a predetermined passage cross-section;

the valve seat (33, 233, 362, 431, 531, 632) and the valve element (62, 241, 343, 441, 541, 641) movably co-acts with the valve seat by motion of the movable core generated upon energisation of the solenoid, the valve element defining in an open state a refrigerant flow gap between the valve element and the valve seat, the valve element being urged by the elastic member (82, 281, 381, 481, 581, 681) counter to the motion of the movable core,

pressure existing on one side of an upstream side and a downstream side of the restriction (51, 26, 372, 462, 462', 561, 643) urges the valve element in one direction of a valve closing direction and a valve opening direction, and pressure existing on one side of an upstream side and a downstream side of the valve element urges the valve element in the respective other direction of the opening direction and the closing direction such that the passage cross-section of the flow gap is adjusted by the motion of the movable core counter to the elastic element such that differential pressure generated across the restriction and the flow rate passing through the flow-regulating expansion valve both are held constant.

2. Flow-regulating expansion valve as in claim 1, **characterised in that** a hollow member (5) is fixedly fitted at one end-side part into the movable core,

that an opposite end-side part of the hollow member is slidably inserted into the fixed core,

that a part (51) of the opposite end-side part has a reduced inner diameter forming the restriction,

that a plurality of support portions (52) extend axially from an extreme end of the opposite end-side part at circumferentially spaced intervals,

that the valve seat (33, 233, 362, 431, 531, 632) is formed on an end of the fixed core opposite from the movable core,

that the valve element (6) has a hollow cylinder guide portion guided by a bottomed hollow cylindrical hollow shaft (7) provided on a side of the fixed core opposite from the movable core, and has a valve portion for the co-action with the valve seat, the valve portion containing a communication hole (63) connecting the inside of the guide portion and the inside of the hollow shaft (7),

that the valve element is urged toward the fixed core by the elastic member (82) provided within the hollow shaft (7), and

that energisation of the solenoid coil (11) causes the hollow member (5) to urge and move the valve element via the support portions (51) away from the valve seat to define the passage cross-section between the valve element and the valve seat.

3. Flow-regulating expansion valve as in claim 1, **characterised in that** the movable core is slidably guided on a stepped column-shaped solid shaft (205, 305, 405, 505),

that a one end-side part of the solid shaft is formed with a stepped portion as a guide of the movable core,

that an opposite-end side part of the solid shaft is fixed in the pipe (2),

that a sealing member (291) is mounted both on an end face of the movable core (204) opposite from the fixed core (203) and on a one end-side end face of the solid shaft for hermetically covering both end faces and clearance formed between them,

that the valve seat (233) is formed on the end of the fixed core (203) facing the movable core,

that the movable core has a hollow cylinder body defining the valve portion of the valve element by an extreme end,

that a hollow cylindrical non-magnetic member (207) is formed continuously with the body to extend into the fixed core, the non-magnetic member (207) having a circumferential flange (271) as a boundary of the restriction (261) between an inner wall of the fixed core and the flange,

and that a predetermined inner space (262) is formed between the stepped portion of the solid shaft and the movable core.

4. Flow-regulating expansion valve as in claim 1, **characterised in that** the movable core (204') is slidably guided on one end-side part of a stepped column-shaped solid shaft (205') formed with a stepped portion as a guide,

that an opposite-end side part of the solid shaft is fixed in the pipe (2),

that the vale seat (207) is formed on an end of the fixed core facing the movable core,

that the movable core has a hollow cylinder body with a valve portion of the valve element formed at an extreme end,

that a hollow cylinder non-magnetic member is continuously formed with the body to extend into the fixed core, the non-magnetic member having a circumferential flange for forming the restriction between an inner wall of the fixed core and the flange,

that the stepped portion of the solid shaft confines a predetermined inner space in the movable core, and that co-acting sliding surfaces of the solid shaft and the movable core, which communicate with the inner space, on a side opposite from the fixed core, have a length not shorter than a predetermined length such that leakage of refrigerant along the sliding surfaces is suppressed.

5. Flow-regulating expansion valve as in claim 1, **char-**

**acterised in that** the movable core (304) is slidably guided on one end-side part of a column-shaped solid shaft (305),
that an opposite-end part of the solid shaft is fixed in the pipe (2),
that the movable core has a hollow cylindrical body with a valve portion of the valve element at an extreme end such that the valve portion can be seated on the valve seat,
that a predetermined axially extending clearance passage (371) is provided between the pipe (2) and the movable core (304),
that a flow-reducing portion with a protruding flange is formed continuously with the valve portion to form the restriction between an inner wall of the pipe (2) and a hollow cylindrical member fitted in the pipe, and
that a predetermined inner space for communicating with the refrigerant flow passage is provided between the solid shaft (305) and the movable core (304).

6. Flow-regulating expansion valve as in claim 5, **characterised in that** the fixed core (303), the movable core (304), and the hollow cylindrical member (306) defining the valve seat (326) and being fixed in the pipe (2) are arranged in the mentioned order from an upstream side of the refrigerant flow passage,
that an upstream end (352) of the solid shaft (305) extends through the fixed core (303) while maintaining an open refrigerant passage,
that an extreme upstream end of the solid shaft (305) is fixed on an upstream end of the fixed core (303), and
that the elastic member (381) interposed between a downstream end of the solid shaft (305) and an inner wall of the movable core (305), and connects the solid shaft and the movable core to support the movable core.

7. Flow-regulating expansion valve as in claim 1, **characterised in that** the movable core (404) is movably guided by one end-side part of a solid column-shaped shaft (452),
that the opposite-end side part of the solid shaft is fixed in the pipe (2),
that the fixed core contains the valve seat (431) on an end facing the movable core (404) and contains a flange (432) protruding inward at a predetermined axial location,
that the movable core (404) comprises:

a hollow cylinder body with a valve portion (441) at an extreme end for the valve seat (431),
a predetermined axial clearance passage (461) being defined between the pipe (2) and the movable core, the movable core and the solid shaft commonly forming a predetermined inner space (463) communicating with the refrigerant passage;
a pressure-equalising pipe (409) fitted into the body and extending into the fixed core and communicating with the inner space, and
the restriction (462) between an end of the pressure-equalising pipe (409) and the flange (432).

8. Flow-regulating expansion valve as in claim 1, **characterised in that** the movable core (404') is movably guided on one end-side part of a column-shaped solid shaft (452),
that an opposite-end side part of the solid shaft (452) is fixed in the pipe (2),
that the fixed core (403) contains the valve seat (431) on an end facing the movable core, and contains a flange (432) protruding inward at a predetermined axial location,
that a passage pipe (409) is secured to the flange (432) and extends into the movable core (404),
that the movable core has a hollow cylindrical body with a vale portion (441) for the valve seat (431),
that a predetermined axial clearance passage is formed between the pipe (2) and the movable core (404'),
that the movable core (404') and the solid shaft (452) commonly form a predetermined inner space (468) communicating with the refrigerant flow passage, and
that the restriction (462) is formed between the passage pipe (409') and the movable core (404').

9. Flow-regulating expansion valve as in claim 1, **characterised in that** the movable core (504) is movably guided on one end-side part of a solid stepped column-shaped shaft (543, 551),
that an opposite-end side part of the solid shaft is fixed in the fixed core (500),
that a sealing member (291) is mounted on adjacent end faces of the movable core (509) and of the solid shaft to hermetically cover both end faces,
that the valve seat (531) is formed on an end of the fixed core (503) facing the movable core,
that the movable core (504) has a hollow cylindrical body with a valve portion (565) at an extreme end for the valve seat,
that a predetermined inner space (562) is formed between the solid shaft and the movable core,
that a predetermined axial clearance passage is formed between the pipe (2) and the movable core (504),
and that the restriction is formed by the clearance.

10. Flow-regulating expansion valve as in claim 1, **characterised in that** the valve seat (665) is formed on an end of the fixed core (603) facing the movable core (604),
that the movable core (604) has a hollow cylindrical body with a valve portion (641) at an extreme end for co-action with the valve seat (665),

that a portion of the movable core (604) in the vicinity of the vale portion (641) has a reduced inner diameter to form the restriction (643) and

that the large-bore part of the movable core (604) on a side of the restriction opposite from the fixed core is movably guided on a hollow cylindrical member (605) which is rigidly fitted into the pipe (202).

## Patentansprüche

1. Strömungsregel-Expansionsventil (1, 201, 301, 401, 501, 601) für einen Kühlmittelkanal eines Kühlmittelkreises zum Dekomprimieren von Kühlmittel durch adiabatische Expansion und zum Abgeben von Kühlmittel mit einer Strömungsgeschwindigkeit, die durch einen Wert eines elektrischen Stroms (i) festgelegt wird, der einer Magnetspule (11) zugeführt wird, wobei das Strömungsregel-Expansionsventil umfasst:

ein Rohr (2, 202, 302), das einen Teil des Kühlmittelkanals bildet;

einen feststehenden hohlen zylindrischen Kern (3, 203, 303, 403, 503, 603) in dem Rohr;

einen axial beweglichen hohlen zylindrischen Kern (4, 204, 304, 404, 504, 604) in dem Rohr, der dem feststehenden Kern gegenüberliegt;

die Magnetspule (11), die das Rohr am Umfang umgibt, um einen Magnetkreis zu bilden, der eine elektromagnetische Kraft mit einer Stärke erzeugt, die dem Wert des zugeführten elektrischen Stroms entspricht, um den beweglichen Kern an eine vorgegebene Bezugsposition in Bezug auf den feststehenden Kern zu bewegen; und

einen Strömungsregelmechanismus, der ein bewegliches Ventilelement, das durch ein elastisches Element in einer Bewegungsrichtung gedrückt wird, sowie einen stationären Ventilsitz in dem Rohr enthält, um Ventilöffnungs- und Ventilschließvorgänge durchzuführen, wenn sich der bewegliche Kern an die vorgegebene Bezugsposition und von ihr weg bewegt, um einen Innen-Kanalquerschnitt zu regulieren, der die Strömungsgeschwindigkeit durch den Strömungsregelmechanismus bestimmt, **dadurch gekennzeichnet, dass** eine Verengung (51, 26, 372, 462, 462', 561, 643) des Strömungsregelmechanismus durch einen feststehenden Kanal eines vorgegebenen Kanalquerschnitts gebildet wird; der Ventilsitz (33, 233, 362, 431, 531, 632) und das Ventilelement (62, 241, 343, 441, 541, 641) durch Bewegung des beweglichen Kerns, die bei Erregung des Elektromagneten erzeugt wird, beweglich zusammenwirken, wobei das Ventilelement in einem offenen Zustand einen Kühlmittel-Strömungsspalt zwischen dem Ventilelement und dem Ventilsitz bildet und das Ventilelement durch das elastische Element (82, 281, 381, 481, 581, 681) entgegengesetzt zu der Bewegung des beweglichen Kerns gedrückt wird,

Druck, der an einer stromauf liegenden Seite oder einer stromab liegenden Seite der Verengung (51, 26, 372, 462, 462', 561, 643) vorhanden ist, das Ventilelement in einer Ventilschließrichtung oder einer Ventilöffnungsrichtung drückt, und Druck, der an einer stromauf liegenden Seite oder einer stromab liegenden Seite des Ventilelementes vorhanden ist, das Ventilelement in die jeweils andere Richtung von der Öffnungsrichtung und der Schließrichtung drückt so dass der Durchlassquerschnitt des Strömungsspaltes durch die Bewegung des beweglichen Kerns entgegengesetzt zu dem elastischen Element so reguliert wird, dass Differenzdruck, der über die Verengung erzeugt wird, und die Strömungsgeschwindigkeit beim Durchlaufen des Strömungsregel-Expansionsventils beide konstant gehalten werden.

2. Strömungsregel-Expansionsventil nach Anspruch 1, **dadurch gekennzeichnet, dass** ein hohles Element (5) an einem Abschlussseitenteil in den beweglichen Kern fest eingesetzt ist,

dass ein gegenüberliegender Abschlussseitenteil des hohlen Elementes verschiebbar in dem feststehenden Kern eingeführt ist,

dass ein Teil (51) des gegenüberliegenden Abschlussseitenteils einen reduzierten Innendurchmesser hat, der die Verengung bildet,

dass sich eine Vielzahl von Trageabschnitten (52) axial von einem äußeren Ende des gegenüberliegenden Abschlussseitenteils in in Umfangsrichtung beabstandeten Intervallen erstrecken,

dass der Ventilsitz (33, 233, 362, 431, 531, 632) an einem Ende des feststehenden Kerns gegenüber dem beweglichen Kern ausgebildet ist,

dass das Ventilelement (6) einen Hohlzylinder-Führungsabschnitt aufweist, der durch eine mit Boden versehene hohlzylindrische Hohlwelle (7) geführt wird, die an einer Seite des feststehenden Kerns gegenüber dem beweglichen Kern vorhanden ist, und einen Ventilabschnitt zum Zusammenwirken mit dem Ventilsitz aufweist, wobei der Ventilabschnitt ein Verbindungsloch (63) enthält das den Innenraum des Führungsabschnitts und den Innenraum der Hohlwelle (7) verbindet,

dass das Ventilelement durch das elastische Element (82), das in der Hohlwelle (7) vorhanden ist, auf den feststehenden Kern zu gedrückt wird, und dass Erregung der Elektromagnetspule (11) bewirkt, dass das hohle Element (5) das Ventilelement über die Trageabschnitte (51) von dem Ventilsitz wegdrückt und bewegt, um den Durchlassquerschnitt zwischen dem Ventilelement und dem Ventilsitz zu bestimmen.

3. Stömungsregel-Expansionsventil nach Anspruch 1, **dadurch gekennzeichnet, dass** der bewegliche Kern gleitend an einer abgesetzten säulenförmigen Vollwelle (205, 305, 405, 505) geführt wird, dass ein Abschlussseitenteil der Vollwelle mit einem abgesetzten Abschnitt als einer Führung des beweglichen Kerns versehen ist, dass ein gegenüberliegender Abschlussseitenteil der Vollwelle in dem Rohr (2) befestigt ist, dass ein Dichtungselement (291) sowohl an einer Abschlussfläche des beweglichen Kerns (204) gegenüber dem feststehenden Kern (203) als auch an einer Abschlussseiten-Abschlussfläche der Vollwelle angebracht ist, um beide Abschlussfläche und den zwischen Ihnen ausgebildeten Zwischenraum hermetisch abzudecken, dass der Ventilsitz (233) an dem Ende des feststehenden Kerns (230) ausgebildet ist, das dem beweglichen Kern zugewandt ist, dass der bewegliche Kern einen Hohlzylinderkörper hat, der den Ventilabschnitt des Ventilelementes durch ein äußerstes Ende bildet, dass ein hohlzylindrisches nichtmagnetisches Element (27) mit dem Körper durchgehend so ausgebildet ist, dass es sich in den feststehenden Kern hineinerstreckt, wobei das nichtmagnetische Element (207) einen Umfangsflansch (271) als eine Grenze der Verengung (261) zwischen einer Innenwand des feststehenden Kerns und dem Flansch hat, und dass ein vorgegebener Innenraum (226) zwischen dem abgesetzten Abschnitt der Vollwelle und dem beweglichen Kern ausgebildet ist.

4. Strömungsregel-Expansionsventil nach Anspruch 1, **dadurch gekennzeichnet, dass** der bewegliche Kern (204') gleitend an einem Abschlussseitenteil einer säulenförmigen Vollwelle (205') geführt wird, die mit einem abgesetzten Abschnitt als einer Führung versehen ist, dass ein gegenüberliegender Abschlussseitenteil der Vollwelle in dem Rohr (2) befestigt ist, dass der Ventilsitz (207) an einem Ende des feststehenden Kerns ausgebildet ist, das dem beweglichen Kern zugewandt ist, dass der bewegliche Kern einen Hohlzylinderkörper hat, wobei ein Ventilabschnitt des Ventilelementes an dem äußersten Ende ausgebildet ist, ein hohlzylindrisches nichtmagnetisches Element mit dem Körper durchgehend so ausgebildet ist, dass es sich in den feststehenden Kern hinein erstreckt, wobei das nichtmagnetische Element einen Umfangsflansch zum Ausbilden der Verengung zwischen einer Innenwand des feststehenden Kerns und dem Flansch aufweist, dass der abgestufte Abschnitt der Vollwelle einen vorgegebenen Innenraum in dem beweglichen Kern eingrenzt, und dass zusammenwirkende Gleitflächen der Vollwelle und des beweglichen Kerns, die mit dem Innenraum in Verbindung stehen, an einer dem feststehenden Kern gegenüberliegenden Seite eine Länge haben, die nicht kürzer ist als eine vorgegebene Länge, so dass Austreten von Kühlmittel entlang der Gleitflächen unterdrückt wird.

5. Strömungsregel-Expansionsventil nach Anspruch 1, **dadurch gekennzeichnet, dass** der bewegliche Kern (304) gleitend an einem Abschlussseitenteil einer säulenförmigen Vollwelle (305) geführt wird, dass ein gegenüberliegender Abschlussteil der Vollwelle in dem Rohr (2) befestigt ist, dass der bewegliche Kern einen hohlzylindrischen Körper mit einem Ventilabschnitt des Ventilelementes an einem äußersten Ende aufweist, so dass der Ventilabschnitt auf dem Ventilsitz aufsitzen kann, dass ein vorgegebener axial verlaufender Zwischenraumdurchlass (371) zwischen dem Rohr (2) und dem beweglichen Kern (304) vorhanden ist, dass ein strömungsreduzierender Abschnitt mit einem vorstehenden Flansch durchgehend mit dem Ventilabschnitt ausgebildet ist, um die Verengung zwischen einer Innenwand des Rohrs (2) und einem in das Rohr eingesetzten hohlzylindrischen Element auszubilden, und dass ein vorgegebener Innenraum zur Verbindung mit dem Kühlmittel-Strömungsdurchlass zwischen der Vollwelle (305) und dem beweglichen Kern (304) vorhanden ist.

6. Strömungsregel-Expansionsventil nach Anspruch 5, **dadurch gekennzeichnet, dass** der feststehende Kern (303), der bewegliche Kern (304) und das hohlzylindrische Element (306), das den Ventilsitz (326) bildet und in dem Rohr (2) befestigt ist, in der genannten Reihenfolge von einer stromauf liegenden Seite des Kühlmittel-Stömungsdurchlasses her angeordnet sind, dass ein stromauf liegendes Ende (352) der Vollwelle (305) sich durch den feststehenden Kern (303) hindurch erstreckt und einen offenen Kühlmitteldurchlass aufrechterhält, dass ein äußerstes stromauf liegendes Ende der Vollwelle (305) an einem stromauf liegenden Ende des feststehenden Kerns (303) befestigt ist, und dass das elastische Element (381) zwischen einem stromab liegenden Ende der Vollwelle (305) und einer Innenwand des beweglichen Kerns (305) angeordnet ist und die Vollwelle und den beweglichen Kern verbindet, um den beweglichen Kern zu tragen.

**7.** Strömungsregel-Expansionsventil nach Anspruch 1, **dadurch gekennzeichnet, dass** der bewegliche Kern (404) durch einen Abschlussseitenteil einer säulenförmigen Vollwelle (452) beweglich geführt wird,

dass der gegenüberliegende Abschlussseitenteil der Vollwelle in dem Rohr (2) befestigt ist,

dass der feststehende Kern den Ventilsitz (431) an einem Ende enthält, das dem beweglichen Kern (404) zugewandt ist, und einen Flansch (432), der nach innen vorsteht, an einer vorgegebenen axialen Position enthält,

dass der bewegliche Kern (404) umfasst:

einen hohlzylindrischen Körper mit einem Ventilabschnitt (441) an einem äußersten Ende für den Ventilsitz (431),

einen vorgegebenen axialen Zwischenraumdurchlass (461), der zwischen dem Rohr (2) und dem beweglichen Kern ausgebildet ist, wobei der bewegliche Kern und die Vollwelle gemeinsam einen vorgegebenen Innenraum (463) bilden, der mit dem Kühlmitteldurchlass in Verbindung steht;

ein Druckausgleichsrohr (409), das in den Körper eingesetzt ist und sich in den feststehenden Kern hinein erstreckt und mit dem Innenraum in Verbindung steht, und

die Verengung (462) zwischen einem Ende des Druckausgleichrohrs (409) und dem Flansch (432).

**8.** Strömungsregel-Expansionsventil nach Anspruch 1, **dadurch gekennzeichnet, dass** der bewegliche Kern (404') beweglich an einem Abschlussseitenteil einer säulenförmigen Vollwelle (452) geführt wird,

dass ein gegenüberliegender Abschlussseitenteil der Vollwelle (452) in dem Rohr (2) befestigt ist,

dass der feststehende Kern (403) den Ventilsitz (431) an einem Ende enthält, das dem beweglichen Kern zugewandt ist, und einen Flansch (432), der nach innen vorsteht, an einer vorgegebenen axialen Position enthält,

dass ein Durchlassrohr (409) an dem Flansch (432) befestigt ist und sich in den beweglichen Kern (404) hinein erstreckt,

dass der bewegliche Kern einen hohlzylindrischen Körper mit einem Ventilabschnitt (441) für den Ventilsitz (431) aufweist,

dass ein vorgegebener axialer Zwischenraumdurchlass zwischen dem Rohr (2) und dem beweglichen Kern (404') ausgebildet ist,

dass der bewegliche Kern (404') und die Vollwelle (452) gemeinsam einen vorgegebenen Innenraum (468) bilden, der mit dem Kühlmittel-Strömungsdurchlass in Verbindung steht; und

dass die Verengung (462) zwischen dem Durchlass (409') und dem beweglichen Kern (404') ausgebildet ist.

**9.** Strömungsregel-Expansionsventil nach Anspruch 1, **dadurch gekennzeichnet, dass** der bewegliche Kern (504) beweglich an einem Abschlussseitenteil einer abgestuften säulenförmigen Vollwelle (543, 551) geführt wird,

dass ein gegenüberliegender Abschlussseitenteil der Vollwelle in dem feststehenden Kern (500) befestigt ist,

dass ein Dichtungselement (291) an aneinandergrenzenden Abschlussflächen des beweglichen Kerns (509) und der Vollwelle angebracht ist, um beide Abschlussflächen hermetisch abzudecken,

dass der Ventilsitz (531) an einem Ende des feststehenden Kerns (503) ausgebildet ist, das dem beweglichen Kern zugewandt ist,

dass der bewegliche Kern (504) einen hohlzylindrischen Körper mit einem Ventilabschnitt (565) an einem äußersten Ende für den Ventilsitz aufweist,

dass ein vorgegebener Innenraum (562) zwischen der Vollwelle und dem beweglichen Kern ausgebildet ist,

dass ein vorgegebener axialer Zwischenraumdurchlass zwischen dem Rohr (2) und dem beweglichen Kern (504) ausgebildet ist,

und dass die Verengung durch den Zwischenraum gebildet wird.

**10.** Strömungsregel-Expansionsventil nach Anspruch 1, **dadurch gekennzeichnet, dass** der Ventilsitz (665) an einem Ende des feststehenden Kerns (603) ausgebildet ist, das dem beweglichen Kern (604) zugewandt ist,

dass der bewegliche Kern (604) einen hohlzylindrischen Körper mit einem Ventilabschnitt (641) an einem äußersten Ende zum Zusammenwirken mit dem Ventilsitz (665) aufweist,

dass ein Abschnitt des beweglichen Kerns (604) in der Nähe des Ventilabschnitts (641) einen reduzierten Innendurchmesser hat, um die Verengung (643) zu bilden, und

dass der Teil des beweglichen Kerns (604) mit großer Bohrung an einer Seite der Verengung gegenüber dem feststehenden Kern beweglich an einem hohlzylindrischen Element (605) geführt wird, das starr in das Rohr (202) eingesetzt ist.

## Revendications

**1.** Soupape de détente à régulation de débit (1, 201, 301, 401, 501, 601), pour un passage à réfrigérant d'un cycle de réfrigération, pour décompresser du réfrigérant par une détente adiabatique, et délivrer du réfrigérant à un débit fixé par une valeur d'un courant électrique (i) fourni à une bobine de solénoïde (11), la soupape de détente à régulation de débit comprenant :

un tube (2, 202, 302) formant une partie du passage à réfrigérant ;
un noyau cylindrique creux fixe (3, 203, 303, 403, 503, 603) dans le tube ;
un noyau cylindrique creux (4, 204, 304, 404, 504, 604) déplaçable axialement, dans le tube opposé au noyau fixe ;
la bobine de solénoïde (11) entourant circonférentiellement le tube, de manière à définir un circuit magnétique, pour générer une force de solénoïde d'une valeur correspondant à la valeur du courant électrique fourni, afin de déplacer le noyau mobile à une position de référence prédéterminée, par rapport au noyau fixe ; et
un mécanisme de régulation de débit, incluant un opercule de soupape déplaçable, sollicité dans un sens de déplacement par un organe élastique, et un siège de soupape stationnaire, placé dans le tube, de manière à effectuer des opérations d'ouverture de soupape et de fermeture de soupape, lorsque le noyau mobile se déplace en rapprochement et en éloignement vis-à-vis de la position de référence prédéterminé, de manière à ajuster une section transversale de passage interne, déterminant le débit traversant le mécanisme de régulation de débit, **caractérisée en ce que**
une restriction (51, 26, 372, 462, 462', 561, 643) du mécanisme de régulation de débit est formée par un passage fixe, de section transversale de passage prédéterminée ;
le siège de soupape (33, 233, 362, 431, 531, 632) et l'opercule de soupape (62, 241, 343, 441, 541, 641) coopèrent de façon déplaçable avec le siège de soupape, par déplacement du noyau mobile, généré lors de l'alimentation en énergie du solénoide, l'opercule de soupape définissant, en un état ouvert, un intervalle d'écoulement de réfrigérant, entre l'opercule de soupape et le siège de soupape, l'opercule de soupape étant sollicité par l'organe élastique (82, 281, 381, 481, 581, 681) à l'encontre du déplacement du noyau mobile,
une pression, existant sur l'un d'un côté amont et d'un côté aval de la restriction (51, 26, 372, 462, 462', 561, 643) sollicite l'opercule de soupape dans l'un d'un sens de fermeture de soupape et d'un sens d'ouverture de soupape, et une pression, existant sur l'un d'un côté amont et d'un côté aval de l'opercule de soupape sollicite l'opercule de soupape dans un autre sens respectif, du sens de fermeture et du sens d'ouverture, de manière que la section transversale de passage de l'intervalle d'écoulement soit ajustée par le déplacement du noyau mobile, à l'encontre de l'élément élastique, de manière qu'une pression différentielle, générée au passage de la restriction, et le débit d'écoulement, passant par la soupape de détente à régulation de débit, soient tous deux maintenus constants.

2. Soupape de détente à régulation de débit selon la revendication 1, **caractérisée en ce qu'**un organe (5) creux est monté rigidement, sur une partie latérale d'extrémité, dans le noyau mobile,
   **en ce qu'**une partie latérale d'extrémité opposée de l'organe creux est insérée à coulissement dans le noyau fixe,
   **en ce qu'**une partie (51) de la partie latérale d'extrémité opposée présente un diamètre intérieur réduit, formant la restriction,
   **en ce qu'**une pluralité de parties support (52) s'étendent axialement en partant d'une extrémité de bout de la partie latérale d'extrémité opposé, à des intervalles espacés circonférentiellement,
   **en ce que** le siège de soupape (33, 233, 362, 431, 531, 632) est formé sur une extrémité du noyau fixe opposée au noyau mobile,
   **en ce que** l'opercule de soupape (6) comprend une partie de guidage cylindrique creuse, guidée par un arbre creux (7), cylindrique creux et borgne, prévu sur un côté du noyau fixe, opposé au noyau mobile, et comprend une partie de soupape prévue pour coopérer avec le siège de soupape, la partie de soupape contenant un trou de communication (63) reliant l'intérieur de la partie de guidage et l'intérieur de l'arbre creux (7),
   **en ce que** l'opercule de soupape est sollicité vers le noyau fixe par l'organe élastique (82) prévu à l'intérieur de l'arbre creux (7), et
   **en ce que** l'actionnement de la bobine de solénoïde (11) provoque la sollicitation et le déplacement, par l'organe creux (5), de l'opercule de soupape, via les parties support (51), avec éloignement vis-à-vis du siège de soupape, de manière à définir la section transversale de passage, entre l'opercule de soupape et le siège de soupape.

3. Soupape de détente à régulation de débit selon la revendication 1, **caractérisée en ce que** le noyau mobile est guidé à coulissement sur un arbre massif (205, 305, 405, 505) en forme de colonne étagée,
   **en ce qu'**une partie latérale d'extrémité de l'arbre massif est fixée dans le tube (2),
   **en ce qu'**un organe d'étanchéité (291) est monté, à la fois sur une face d'extrémité du noyau mobile (207) opposée au noyau fixe (203) et sur une face d'extrémité de côté de bout de l'arbre massif, de manière à couvrir de façon étanche les deux faces d'extrémité et le jeu formé entre elles,
   **en ce que** le siège de soupape (233) est formé sur l'extrémité du noyau fixe (203) placée face au noyau mobile,
   **en ce que** le noyau mobile présente un corps cylindrique creux, définissant la partie de soupape de l'opercule de soupape, par une extrémité de bout, **en ce qu'**un organe non magnétique (207) cylindrique creux est formé de façon continue avec le corps, pour s'étendre à l'intérieur du noyau fixe, l'organe non magnétique (207) comprenant une bride circonférentielle (271) en tant que frontière de la restriction (261), entre une paroi intérieure du noyau fixe et la bride,

et **en ce qu'**un espace intérieur (262) prédéterminé est formé, entre la partie étagée de l'arbre massif et le noyau mobile.

4. Soupape de détente à régulation de débit selon la revendication 1, **caractérisée en ce que** le noyau mobile (204') est guidé à coulissement sur une partie latérale d'extrémité d'un arbre massif (205') en forme de colonne étagée, muni d'une partie étagée faisant office de guide,

   **en ce qu'**une partie latérale d'extrémité opposée de l'arbre massif est fixée dans le tube (2),

   **en ce que** le siège de soupape (207) est formé sur une extrémité du noyau fixe placée en regard du noyau mobile,

   **en ce que** le noyau mobile présente un corps cylindrique creux, une partie de soupape de l'opercule de soupape étant formée à une extrémité de bout,

   **en ce qu'**un organe non magnétique cylindrique creux est formé de façon continue avec le corps, pour s'étendre à l'intérieur du noyau fixe, l'organe non magnétique comprenant une bride circonférentielle pour former la restriction, entre une paroi intérieure du noyau fixe et la bride,

   et **en ce que** la partie étagée de l'arbre massif confine un espace intérieur prédéterminé dans le noyau mobile, et

   **en ce que** des surfaces de coulissement coopérant, de l'arbre massif et du noyau mobile, qui communiquent avec l'espace intérieur, sur un côté opposé au noyau fixe, ont une longueur non supérieure à une longueur prédéterminée, de manière que toute fuite de réfrigérant le long des surfaces de coulissement soit supprimée.

5. Soupape de détente à régulation de débit selon la revendication 1, **caractérisée en ce que** le noyau mobile (304) est guidé à coulissement sur une partie latérale d'extrémité d'un arbre massif (305) en forme de colonne,

   **en ce qu'**une partie d'extrémité opposée de l'arbre massif est fixée dans le tube (2),

   **en ce que** le noyau mobile présente un corps cylindrique creux, avec une partie de soupape de l'opercule de soupape à extrémité de bout, de manière que la partie de soupape puisse siéger sur le siège de soupape,

   **en ce qu'**un passage de jeu (371) prédéterminé, s'étendant axialement, est prévu, entre le tube (2) et le noyau mobile (304),

**en ce qu'**une partie de réduction d'écoulement, munie d'une bride en saillie, est formée de façon continue avec la partie de soupape, de manière à former la restriction entre une paroi intérieure du tube (2) et un organe cylindrique creux, monté dans le tube, et **en ce qu'**un espace intérieur prédéterminé, pour communiquer avec le passage d'écoulement à réfrigérant, est prévu, entre l'arbre massif (305) et le noyau mobile (304).

6. Soupape de détente à régulation de débit selon la revendication 5, **caractérisée en ce que** le noyau fixe (303), le noyau mobile (304) et l'organe cylindrique creux (306), définissant le siège de soupape (326) et fixé dans le tube (2), sont agencés dans l'ordre mentionné, en partant d'un côté amont du passage d'écoulement à réfrigérant,

   **en ce qu'**une extrémité amont (352) de l'arbre massif (305) s'étend à travers le noyau fixe (303), tout en maintenant un passage à réfrigérant ouvert,

   **en ce qu'**une extrémité amont de bout de l'arbre massif (305) est fixée sur une extrémité amont du noyau fixe (303), et

   **en ce que** l'organe élastique (381) est interposé entre une extrémité aval de l'arbre massif (305) et une paroi intérieure du noyau mobile (305), et relie l'arbre massif et le noyau mobile, de manière à supporter le noyau mobile.

7. Soupape de détente à régulation de débit selon la revendication 1, **caractérisée en ce que** le noyau mobile (404) est guidé de façon déplaçable par une partie latérale d'extrémité d'un arbre massif (452) en forme de colonne,

   **en ce que** la partie latérale d'extrémité opposée de l'arbre massif est fixée dans le tube (2),

   **en ce que** le noyau fixe contient le siège de soupape (431) sur une extrémité placée en regard du noyau mobile (404) et contient une bride (432), faisant saillie vers l'intérieur, en un emplacement axial prédéterminé,

   **en ce que** le noyau mobile (404) comprend :

   un corps cylindrique creux, muni d'une partie de soupape (441) à une extrémité de bout, pour le siège de soupape (431),

   un passage de jeu axial (461) prédéterminé, défini entre le tube (2) et le noyau mobile, le noyau mobile et l'arbre massif formant, conjointement, un espace intérieur (463) prédéterminé, communiquant avec le passage à réfrigérant ;

   un tube d'égalisation de pression (409), monté dans le corps et s'étendant dans le noyau fixe et communiquant avec l'espace intérieur, et

   la restriction (462), entre une extrémité du tube d'égalisation de pression (409) et la bride (432).

**8.** Soupape de détente à régulation de débit selon la revendication 1, **caractérisée en ce que** le noyau mobile (404') est guidé de façon déplaçable sur une partie latérale d'extrémité d'un arbre massif (452) en forme de colonne,

**en ce qu'**une partie latérale d'extrémité opposée de l'arbre massif (452) est fixée dans le tube (2),

**en ce que** le noyau fixe (403) contient le siège de soupape (431) sur une extrémité placée en regard du noyau mobile, et contient une bride (432), faisant saillie vers l'intérieur, en un emplacement axial prédéterminé,

**en ce qu'**un tube de passage (409) est fixé à la bride (432) et s'étend à l'intérieur du noyau mobile (404),

**en ce que** le noyau mobile comprend un corps cylindrique creux, avec une partie de soupape (441) pour le siège de soupape (431),

**en ce qu'**un passage de jeu axial prédéterminé est formé, entre le tube (2) et le noyau mobile (404'),

**en ce que** le noyau mobile (404') et l'arbre massif (452) forment conjointement un espace intérieur (468) prédéterminé, communiquant avec le passage à réfrigérant, et

la restriction (462) est formée entre le tube de passage (409') et le noyau mobile (404').

**9.** Soupape de détente à régulation de débit selon la revendication 1, **caractérisée en ce que** le noyau mobile (504) est guidé de façon déplaçable, sur une partie latérale d'extrémité d'un arbre massif (543, 551) en forme de colonne étagée,

**en ce qu'**une partie latérale d'extrémité opposée de l'arbre massif est fixée dans le noyau fixe (500),

**en ce qu'**un organe d'étanchéité (291) est monté, sur des faces d'extrémité adjacentes du noyau mobile (509) et de l'arbre massif, de manière à couvrir de façon étanche les deux faces d'extrémité,

**en ce que** le siège de soupape (531) est formé sur une extrémité du noyau fixe (503) placée en regard du noyau mobile,

**en ce que** le noyau mobile (504) présente un corps cylindrique creux, avec une partie de soupape (565), à une extrémité de bout, pour le siège de soupape,

**en ce qu'**un espace intérieur (562) prédéterminé est formé entre l'arbre massif et le noyau mobile,

**en ce qu'**un passage de jeu axial, prédéterminé, est formé, entre le tube (2) et le noyau mobile (504),

et **en ce que** la restriction est formée par le jeu.

**10.** Soupape de détente à régulation de débit selon la revendication 1, **caractérisée en ce que** le siège de soupape (665) est formé sur une extrémité du noyau fixe (603) placée en regard du noyau mobile (604),

**en ce que** le noyau mobile (604) présente un corps cylindrique creux, avec une partie de soupape (641) à une extrémité de bout, pour coopération avec le siège de soupape (665),

**en ce qu'**une partie du noyau mobile (604), à proximité de la partie de soupape (641), présente un diamètre intérieur réduit, pour former la restriction (643), et

**en ce que** la partie à gros perçage du noyau mobile (604), sur un côté de la restriction opposé au noyau fixe, est guidée de façon déplaçable sur un organe cylindrique (605) creux, monté rigidement à l'intérieur du tube (202).

FIG. 1

FIG. 2

FIG. 3

FIG. 4

FIG. 5

FIG. 6

FIG. 7

FIG. 8

FIG. 9

**FIG. 10**

FIG. 11

FIG. 12

501

70  70a

521

291  202

562  551

561  505

15  542

13  504

564  552

565  543

10  541

581  531

507

571  532

11

14  503

12

522

70  70a

# FIG. 13

FIG. 14

FIG. 15

FIG. 16

**EP 1 515 101 B1**

**REFERENCES CITED IN THE DESCRIPTION**

**Patent documents cited in the description**

- EP 1316750 A
- US 6182457 B1